# EUROPÄISCHE PATENTANMELDUNG

(11) **EP 4 745 044 A1**
(43) Veröffentlichungstag der Anmeldung: **20.05.2026**
(21) Anmeldenummer: 25213671.8
(22) Anmeldetag: 05.11.2025
(51) Int. Cl.: B64G 1/22

(54) **AKTUATORMODUL MIT DÄMPFUNGSSYSTEM**

(30) Priorität: 15.11.2024 DE 102024133516
(71) Anmelder: Dcubed GmbH, 82110 Germering (DE)
(72) Erfinder: QUINTANA BUIL, Guillem, 82110 Germering (DE); GRUBER, Joram Mathias, 82110 Germering (DE); TITZ, Alexander, 82110 Germering (DE)
(74) Vertreter: Schott, Jakob Valentin

(57) **Zusammenfassung**

Beschrieben wird ein Aktuatormodul zur Freisetzung einer Ausrstungskomponente, umfassend: eine Führungshülse (4); einen zur Kopplung mit der Ausrüstungskomponente (4000; 5000) vorgesehenen Kopplungskörper (48; 49), welcher relativ zu der Führungshülse (4) längs einer Hülsenachse (5) derselben aus einer Bereitschaftsposition in eine Arbeitsposition beweglich angeordnet ist, wobei der Kopplungskörper (48; 49) durch Überführung aus der Bereitschafts- in die Arbeitsposition eine Freisetzung der Ausrüstungskomponente (4000; 5000) zu bewirken vermag; einen relativ zu der Führungshülse (4) zwischen einer Blockierstellung und einer Freigabestellung beweglichen Blockierkörper (8), welcher in seiner Blockierstellung eine Blockierung des Kopplungskörpers (48; 49) gegen Bewegung aus der Bereitschaftsposition in die Arbeitsposition bewirkt und in seiner Freigabestellung eine Bewegung des Kopplungskörpers (48; 49) aus der Bereitschaftsposition in die Arbeitsposition gestattet; eine Aktuatoreinrichtung (21) zur Bewegung des Blockierkörpers (8) aus der Blockierstellung in die Freigabestellung; ein Federsystem (58), das dazu ausgelegt ist, eine Federvorspannung bereitzustellen, welche den Kopplungskörper (48; 49) in der Bereitschaftsposition in Richtung aus der Bereitschaftsposition auf die Arbeitsposition drängt; und ein Dämpfungssystem (66), das so ausgelegt ist, dass es den Kopplungskörper (48; 49) bei einer Bewegung des Kopplungskörpers in die Arbeitsposition abbremst oder/und abfedert.

## Beschreibung

Die Erfindung betrifft ein Aktuatormodul zur Freisetzung einer Ausrüstungskomponente. Die Ausrüstungskomponente kann eine Ausrüstungskomponente eines Satelliten sein, beispielsweise eine entfaltbare, aufblasbare und/oder ausfahrbare Komponente des Satelliten, wie beispielsweise ein Solarpanel, eine Antenne oder ein Bremsschirm. Die Ausrüstungskomponente kann eine Ausrüstungskomponente einer sub- oder orbitalen Plattform wie einer Rakete sein, insbesondere ein abzutrennender oder zu bewegender Raketenbauteil oder ein freizugebender Satellit.

Das Aktuatormodul umfasst eine Führungshülse. Die Führungshülse hat beispielsweise im Wesentlichen die Form eines allgemeinen Zylinders mit axialer Durchgangsbohrung, beispielsweise die Form eines Hohlzylinders. Das Aktuatormodul kann eine Modulbasis umfassen, welche die Führungshülse bildet. Die Modulbasis kann eine Grundplatte mit zumindest angenähert polygonförmigem oder kreisförmigem Umriss umfassen. Beispielsweise steht die Führungshülse im Wesentlichen plattenmittig von der Grundplatte auf bzw. ab.

Das Aktuatormodul umfasst ferner einen zur Kopplung mit der Ausrüstungskomponente vorgesehenen Kopplungskörper, welcher relativ zu der Führungshülse längs einer Hülsenachse derselben aus einer Bereitschaftsposition in eine Arbeitsposition beweglich angeordnet ist, wobei der Kopplungskörper durch Überführung aus der Bereitschafts- in die Arbeitsposition eine Freisetzung der Ausrüstungskomponente zu bewirken vermag. Der Freisetzungskörper ist beispielsweise im Wesentlichen zylinderförmig oder/und rotationssymmetrisch ausgebildet. Der Kopplungskörper kann axialsymmetrisch zu der Führungshülse angeordnet sein. Beispielsweise ist der Kopplungskörper so angeordnet, dass dessen Längsachse parallel oder deckungsgleich zu der Hülsenachse verläuft (z.B. sowohl in der Bereitschaftsposition als auch in der Arbeitsposition).

Außerdem umfasst das Aktuatormodul einen relativ zu der Führungshülse zwischen einer Blockierstellung und einer Freigabestellung beweglichen Blockierkörper, welcher in seiner Blockierstellung eine Blockierung des Kopplungskörpers gegen Bewegung aus der Bereitschaftsposition in die Arbeitsposition bewirkt und in seiner Freigabestellung eine Bewegung des Kopplungskörpers aus der Bereitschaftsposition in die Arbeitsposition gestattet. Der Blockierkörper hat beispielsweise im Wesentlichen die Form eines allgemeinen Zylinders mit axialer Durchgangsbohrung, beispielsweise die Form eines Hohlzylinders. Der Blockierkörper kann auf die Führungshülse aufgesetzt sein. Der Blockierkörper kann die Führungshülse zumindest teilweise, vorzugsweise komplett in Umfangsrichtung umschließen. Der Blockierkörper kann relativ zu der Führungshülse axial zwischen seiner Blockierstellung und seiner Freigabestellung beweglich angeordnet sein.

Das Aktuatormodul umfasst ferner ein Federsystem, das dazu ausgelegt ist, eine (z.B. erste) Federvorspannung bereitzustellen, welche den Kopplungskörper in der Bereitschaftsposition in Richtung aus der Bereitschaftsposition auf die Arbeitsposition drängt. Das Federsystem kann ferner dazu ausgelegt sein, eine (z.B. zweite) Federvorspannung bereitzustellen, welche den Blockierkörper in der Freigabestellung in Richtung aus der Freigabestellung hin zu der Blockierstellung drängt. Das Federsystem kann zur Aufbringung der (z.B. ersten oder/und zweiten) Federvorspannung (z.B. jeweils) eine Feder umfassen, insbesondere eine Druckfeder, beispielsweise eine Spiral-, Wellen- oder Blattfeder.

Das Aktuatormodul umfasst ferner eine Aktuatoreinrichtung zur Bewegung des Blockierkörpers aus der Blockierstellung in die Freigabestellung. Das Aktuatormodul kann so ausgelegt sein, dass es eine Aktivierungskraft aufbringt, die entgegen der (z.B. zweiten) Federvorspannung wirkt, welche den Blockierkörper in Richtung aus der Freigabestellung hin zu der Blockierstellung drängt.

Aus dem Stand der Technik sind Aktuatormodule zur Freisetzung von Ausrüstungskomponenten bekannt. Diese haben jedoch häufig den Nachteil, dass entweder geringe Stellkräfte bereitgestellt werden oder/und dass es bei der Aktuation zu starken Vibrationen kommt.

Erfindungsgemäß umfasst das Aktuatormodul ein Dämpfungssystem, das so ausgelegt ist, dass es den Kopplungskörper bei einer Bewegung des Kopplungskörpers in die Arbeitsposition abbremst oder/und abfedert. So können Vibrationen verringert werden, die bei einem schlagartigen Stoppen des Kopplungskörpers in dessen Arbeitsposition auftreten könnten. Dies ermöglicht wiederum, den Kopplungskörper mit einer höheren Geschwindigkeit in die Arbeitsposition zu bewegen in Richtung der Arbeitsposition zu beschleunigen, ohne dass unerwünscht hohe Vibrationen auftreten. Letztlich gestattet die erfindungsgemäße Lösung also auch eine Erhöhung der Federvorspannung, die den Kopplungskörper aus der Bereitschaftsposition in die Arbeitsposition drängt, sodass hohe Stellkräfte des Kopplungskörpers bei gleichzeitig geringen Vibrationen ermöglicht werden.

Das Dämpfungssystem kann so ausgelegt sein, dass es den Freisetzungskörper nur über einen Teil von dessen Bewegung oder Bewegungspfad in Richtung auf die Arbeitsposition abbremst, insbesondere über einen in der Arbeitsposition endenden Teil der Bewegung oder des Bewegungspfads. Das Dämpfungssystem kann so ausgelegt sein, dass es einen Stoß des Kopplungskörpers abdämpft, der bei dessen Bewegung in die Arbeitsposition (z.B. unmittelbar vor oder bei Erreichen der Arbeitsposition) auftritt.

Beispielsweise ist das Dämpfungssystem so ausgelegt, dass es die Arbeitsposition des Kopplungskörpers festlegt. Insbesondere kann das Dämpfungssystem einen Anschlag für den Kopplungskörper bereitstellen, der so ausgebildet ist, dass der Kopplungskörper in der Arbeitsposition ist, wenn er an dem Anschlag anliegt. Beispielsweise ist das Federsystem so ausgelegt, dass es den Kopplungskörper auf den Anschlag des Dämpfungssystems drückt, wenn der Kopplungskörper in der Arbeitsposition ist.

Beispielsweise umfasst das Dämpfungssystem ein Dämpfungselement, wobei das Aktuatormodul so ausgelegt ist, dass das Dämpfungselement mit dem Kopplungskörper in Kontakt steht, wenn der Kopplungskörper in der Arbeitsposition ist. Das Dämpfungselement kann den Anschlag für den Kopplungskörper bilden. Das Dämpfungselement ist insbesondere in einem Innenraum des Aktuatormoduls angeordnet. Der Innenraum kann an zumindest einer Seite von der Modulbasis begrenzt sein.

Das Dämpfungselement kann zumindest teilweise oder vollständig aus einem Elastomer bestehen, insbesondere aus Gummi, Silikon oder einem anderen elastischen Kunststoff. Es ist auch denkbar, dass das Dämpfungselement eine Feder umfasst, insbesondere eine Druckfeder, beispielsweise eine Spiral-, Wellen- oder Blattfeder.

Es ist denkbar, dass der Kopplungskörper einen radialen Vorsprung aufweist. Das Aktuatormodul kann so ausgelegt sein, dass das Dämpfungselement in direktem Kontakt mit dem radialen Vorsprung steht, wenn der Kopplungskörper in der Arbeitsposition ist. Der radiale Vorsprung kann sich umfangsseitig um den Kopplungskörper erstrecken. Der radiale Vorsprung kann ringförmig oder scheibenförmig ausgebildet sein. Der radiale Vorsprung kann in axialer Draufsicht auf den Kopplungskörper einen kreisförmigen Außenumriss aufweisen.

Der Kopplungskörper erstreckt sich insbesondere von einem ersten axialen Ende zu einem zweiten axialen Ende. In einem ersten Beispiel ist der radiale Vorsprung zwischen den beiden axialen Enden des Kopplungskörpers angeordnet. In einem zweiten Beispiel ist der radiale Vorsprung an einem der beiden axialen Enden des Kopplungskörpers angeordnet, wobei er eine Stirnseite des Kopplungskörpers bilden kann.

Es ist denkbar, dass sich das Dämpfungselement konzentrisch zu der Führungshülse erstreckt. Das Dämpfungselement kann axial beabstandet zu der Führungshülse angeordnet sein. Das Dämpfungselement kann auf einer der Führungshülse abgewandten Seite der Modulbasis angeordnet sein. Beispielsweise ist das Dämpfungselement in einer Aussparung eingebettet. Die Aussparung kann in der Modulbasis, insbesondere in der Grundplatte eingebracht sein. Die Aussparung kann alternativ in einer Verbindungsplatte eingebracht sein, die an der Modulbasis oder/und der Grundplatte befestigt ist. Die Verbindungsplatte kann im Wesentlichen scheibenförmig ausgebildet sein. Beispielsweise ist die Verbindungsplatte im Wesentlichen parallel zu der Grundplatte angeordnet. Die Aussparung kann auf einer der Führungshülse abgewandten Seite eingebracht sein.

In einer Variante kann sich das Dämpfungselement in Umfangsrichtung um den Kopplungskörper erstrecken, zumindest wenn der Kopplungskörper in der Arbeitsposition ist, optional auch wenn der Kopplungskörper in der Bereitschaftsposition ist. Der Kopplungskörper kann sich beispielsweise durch das Dämpfungselement hindurch erstrecken, zumindest wenn der Kopplungskörper in der Arbeitsposition ist, optional auch wenn der Kopplungskörper in der Bereitschaftsposition ist. Das Dämpfungselement kann ringförmig ausgebildet sein. Beispielsweise umfasst oder ist das Dämpfungselement ein O-Ring oder eine Spiralfeder. Das Dämpfungselement kann in einer besonderen Variante außerdem als Führungselement ausgebildet sein und insbesondere den Kopplungskörper führen oder/und axial verschiebbar lagern. In diesem Fall erfüllt das Dämpfungselement dann sozusagen eine Doppelfunktion.

Es ist denkbar, dass der Kopplungskörper zumindest in der Bereitschaftsposition, optional auch in der Arbeitsposition, außerhalb der Führungshülse (z.B. axial versetzt zur Führungshülse) angeordnet ist. Der radiale Vorsprung kann zumindest in der Bereitschaftsposition, optional auch in der Arbeitsposition, axial beabstandet zu der Führungshülse angeordnet sein.

Beispielsweise umfasst das Federsystem eine Feder, die außerhalb der Führungshülse angeordnet ist und eine Federvorspannung bereitstellt, die zumindest in der Bereitschaftsposition auf den Kopplungskörper wirkt. Diese Feder kann insbesondere die Federvorspannung bereitstellen, welche den Kopplungskörper in Richtung der Arbeitsposition drängt. Diese Feder kann zum Beispiel an dem radialen Vorsprung des Kopplungskörpers oder/und an einer axialen Stirnseite des Kopplungskörpers abgestützt sein. Diese Feder kann sich umfangsseitig um den Kopplungskörper erstrecken. Diese Feder kann die stärkste Feder des Aktuatormoduls sein. Diese Feder ist insbesondere eine Druckfeder, beispielsweise eine Spiral-, Wellen- oder Blattfeder.

Beispielsweise umfasst das Aktuatormodul ferner einen Gehäuseaufsatz, durch welchen sich eine parallel zu der Hülsenachse verlaufende (z.B. rotationssymmetrische, insbesondere kreiszylindrische) Aussparung erstreckt. Der Gehäuseaufsatz ist insbesondere bezogen auf die Führungshülse festgelegt. Dazu kann der Gehäuseaufsatz an der Modulbasis oder/und an der Grundplatte oder/und an der Verbindungsplatte befestigt sein. Der Gehäuseaufsatz kann durch die Verbindungsplatte von der Grundplatte beabstandet sein. Der Gehäuseaufsatz kann im Wesentlichen senkrecht von der Verbindungsplatte abstehen, insbesondere entgegen der Richtung, in welcher die Führungshülse von der Grundplatte absteht. Die außerhalb der Führungshülse angeordnete Feder des Federsystems kann in der Aussparung des Gehäuseaufsatzes angeordnet sein. Die Aussparung kann zumindest einen Abschnitt des Innenraums des Aktuatormoduls bilden. Die Aussparung kann so ausgebildet sein, dass sie den radialen Vorsprung des Kopplungskörpers axial verschiebbar lagert. Der Gehäuseaufsatz kann eine Öffnung aufweisen, durch welche sich der Kopplungskörper zumindest in der Bereitschaftsposition erstreckt. Die Öffnung so ausgelegt sein, dass sie den Kopplungskörper axial verschiebbar lagert. Die Aussparung kann radial größer sein als die Öffnung des Gehäuseaufsatzes. Eine axiale Innenoberfläche des Gehäuseaufsatzes neben oder/und angrenzend an die Öffnung des Gehäuseaufsatzes kann die Feder abstützen, welche die Federvorspannung bereitstellt, die den Kopplungskörper in Richtung der Arbeitsposition drängt.

Beispielsweise umfasst das Aktuatormodul ferner einen in die Führungshülse eingesetzten Freisetzungskörper, welcher relativ zu der Führungshülse längs der Hülsenachse aus einer Bereitschaftsstellung in eine Arbeitsstellung beweglich angeordnet ist. In diesem Fall kann das Federsystem ferner dazu ausgelegt sein, (z.B. anhand einer entsprechenden Feder, insbesondere anhand einer Druckfeder, beispielsweise einer Spiral-, Wellen- oder Blattfeder) eine Federvorspannung bereitzustellen, welche den Freisetzungskörper in der Bereitschaftsstellung in Richtung auf die Arbeitsstellung drängt. Dabei ist der Freisetzungskörper insbesondere so ausgelegt, dass er in der Bereitschaftsstellung eine Bewegung des Kopplungskörpers aus der Bereitschaftsposition in die Arbeitsposition blockiert und bei einer Bewegung aus der Bereitschaftsstellung in die Arbeitsstellung eine Bewegung des Kopplungskörpers aus der Bereitschaftsposition in die Arbeitsposition gestattet. Ferner kann das Aktuatormodul so ausgebildet sein, dass der Blockierkörper in seiner Blockierstellung eine Blockierung des Freisetzungskörpers gegen Bewegung aus der Bereitschaftsstellung in die Arbeitsstellung bewirkt und in seiner Freigabestellung eine Bewegung des Freisetzungskörpers aus der Bereitschaftsstellung in die Arbeitsstellung gestattet.

Das Aktuatormodul kann ein Gehäuse umfassen. Das Gehäuse umhaust vorzugsweise zumindest den Freisetzungskörper und den Blockierkörper. Das Gehäuse ist vorzugsweise an der Modulbasis befestigt. In einer ersten Variante ist das Gehäuse einstückig ausgebildet. In einer zweiten Variante umfasst das Gehäuse zwei ineinander geschachtelte Gehäuseteile gebildet, die jeweils im Wesentlichen trogförmig oder tassenförmig geformt sein können. Dabei sind die Gehäuseteile so angeordnet, dass ihre Relativpositionen festgelegt sind. Man kann also sagen, dass die Gehäuseteile bezogen zueinander fixiert sind. Beispielsweise ist das innenliegende Gehäuseteil (z.B. nur) an der Grundplatte befestigt. Beispielsweise ist das außenliegende Gehäuseteil (z.B. nur) an der Verbindungsplatte befestigt. Nachfolgend ist, wenn von dem "Gehäuse" die Rede ist, insbesondere das einstückige Gehäuse oder zumindest einer der Gehäuseteile gemeint.

Das Gehäuse kann so ausgestaltet sein, dass es die Blockierstellung und/oder die Freigabestellung des Blockierkörpers festlegt. Hierzu kann das Gehäuse so ausgestaltet sein, dass es eine Bewegung des Blockierkörpers in axialer Richtung begrenzt. Das Gehäuse kann ferner so ausgestaltet sein, dass es eine Bewegung des Blockierkörpers in einer der axialen Richtung gegengesetzten Richtung begrenzt. Das Gehäuse kann so ausgestaltet sein, dass es die Bereitschaftsposition und/oder die Arbeitsposition des Kopplungskörpers festlegt. Hierzu kann das Gehäuse so ausgelegt sein, dass es eine Bewegung des Kopplungskörpers in axialer Richtung begrenzt. Das Gehäuse kann ferner so ausgestaltet sein, dass es eine Bewegung des Kopplungskörpers in einer der axialen Richtung gegengesetzten Richtung begrenzt. Das Gehäuse kann so ausgestaltet sein, dass es die Bereitschaftsstellung und/oder die Arbeitsstellung des Freisetzungskörpers festlegt. Hierzu kann das Gehäuse so ausgelegt sein, dass es eine Bewegung des Freisetzungskörpers in axialer Richtung begrenzt. Das Gehäuse kann ferner so ausgestaltet sein, dass es eine Bewegung des Freisetzungskörpers in einer der axialen Richtung gegengesetzten Richtung begrenzt. Das Gehäuse kann an der Modulbasis oder/und dem Gehäuseaufsatz oder/und der Verbindungsplatte befestigt sein.

Das Gehäuse oder zumindest einer der Gehäuseteile kann so ausgestaltet sein, dass es bzw. er eine Rotationsbewegung des Blockierkörpers um die Führungshülsenachse in einer oder beiden Richtungen begrenzt oder/und verhindert. Der Blockierkörper ist beispielsweise drehfest angeordnet bzw. gegen eine Rotation (z.B. um die Hülsenachse) gesichert. Dazu kann der Blockierkörper einen Gleitfortsatz aufweisen, welcher mit einem Führungselement zusammenwirkt, welches eine Bewegung des Gleitfortsatzes nur axial entlang der Hülsenachse gestattet. Der Gleitfortsatz kann als Aufnahme ausgestaltet sein, die so ausgebildet ist, dass sie das Führungselement aufnimmt. Dabei kann das Führungselement insbesondere schienenartig ausgebildet sein. Das Führungselement kann an einer Innenseite des Gehäuses oder Gehäuseteils angeordnet sein und ist insbesondere einstückig mit ebendiesem Gehäuse oder Gehäuseteil gefertigt.

Die Modulbasis, beispielsweise die Grundplatte oder die Führungshülse, kann so ausgestaltet sein, dass sie die Bereitschaftsposition und/oder die Arbeitsposition des Kopplungskörpers festlegt. Hierzu kann die Modulbasis so ausgestaltet sein, dass sie eine Bewegung des Kopplungskörpers in der axialen Richtung begrenzt. Die Modulbasis kann ferner so ausgestaltet sein, dass sie eine Bewegung des Kopplungskörpers in einer der axialen Richtung gegengesetzten Richtung begrenzt. Alternativ oder zusätzlich kann die Modulbasis, beispielsweise die Grundplatte oder die Führungshülse, so ausgestaltet sein, dass sie die Bereitschaftsstellung und/oder die Arbeitsstellung des Freisetzungskörpers festlegt. Hierzu kann die Modulbasis so ausgestaltet sein, dass sie eine Bewegung des Freisetzungskörpers in der axialen Richtung begrenzt. Die Modulbasis kann ferner so ausgestaltet sein, dass sie eine Bewegung des Freisetzungskörpers in einer der axialen Richtung gegengesetzten Richtung begrenzt.

In der Hülsenwand der Führungshülse kann ein Durchgangsloch für eine Sperrkugel gebildet sein. Die Sperrkugel kann in der Blockierstellung des Blockierkörpers radial einwärts über die Innenumfangsfläche der Führungshülse hinausstehen, um (i) den Freisetzungskörper oder/und (ii) den Kopplungskörper gegen Bewegung aus der Bereitschaftsposition in die Arbeitsposition zu blockieren. Hierbei ist in der Freigabestellung des Blockierkörpers die Sperrkugel für eine Verlagerung aus dem axialen Bewegungsbereich (i) des Freisetzungskörpers oder/und (ii) des Kopplungskörpers heraus freigegeben. Das Federsystem kann eine (z.B. Spiral- oder Wellen-) Feder umfassen, die in eine axiale Tasche (i) des Freisetzungskörpers oder (ii) des Kopplungskörpers eingesetzt ist. Diese Feder kann zur Erzeugung einer Federvorspannung dienen, welche (i) den Freisetzungskörper in Richtung der Arbeitsstellung oder/und (ii) den Kopplungskörper in Richtung der Arbeitsposition drängt. Beispielsweise liegt (i) der Freisetzungskörper in seiner Arbeitsstellung mit einer Außenseite, insbesondere mit der radial äußeren Taschenwand der Tasche, radial vor der Sperrkugel, oder es liegt (ii) der Kopplungskörper in seiner Arbeitsposition mit einer Außenseite, insbesondere mit der radial äußeren Taschenwand der Tasche, radial vor der Sperrkugel.

Vorzugsweise ist die Sperrkugel dazu ausgebildet, in der Freigabestellung des Blockierkörpers radial auswärts über die Außenumfangsfläche der Führungshülse hinauszustehen. Hierdurch kann die Sperrkugel den Blockierkörper gegen Bewegung aus der Freigabestellung in die Blockierstellung zu blockieren, insbesondere wenn (i) der Freisetzungskörper in seiner Arbeitsstellung mit der Außenseite radial vor der Sperrkugel liegt oder (ii) der Kopplungskörper in seiner Arbeitsposition mit der Außenseite radial vor der Sperrkugel liegt. Ferner ist das Blockierelement in einem Beispiel derart ausgestaltet, dass es in der Freigabestellung von der durch das Federsystem auf das Blockierelement aufgebrachten Federvorspannung getrieben eine radial einwärts auf die Sperrkugel wirkende Kraft zu bewirken. Beispielsweise ist (i) der Festsetzungskörper derart ausgestaltet, dass er in der Bereitschaftsstellung von der durch das Federsystem auf den Freisetzungskörper aufgebrachten Federvorspannung getrieben eine radial auswärts auf die Sperrkugel wirkende Kraft bewirkt, oder (ii) der Kopplungskörper derart ausgestaltet, dass er in der Bereitschaftsposition von der durch das Federsystem auf den Kopplungskörper aufgebrachten Federvorspannung getrieben eine radial auswärts auf die Sperrkugel wirkende Kraft bewirkt.

Beispielsweise umfasst die Aktuatoreinrichtung mindestens einen mit beiden Drahtenden bezogen auf die Führungshülse (z.B. an der Modulbasis) festgelegten, mit dem Blockierkörper gekoppelten Aktuatordraht aus einem Formgedächtnismaterial. Das Formgedächtnismaterial ist dabei insbesondere eingerichtet, sich bei einer Aktuierung zusammenzuziehen. Beispielsweise handelt es sich bei dem Formgedächtnismaterial um eine Formgedächtnislegierung, die sich beim Erhitzen zumindest in Längsrichtung des Aktuatordrahts zusammenzieht. Das Erhitzen kann z.B. durch ohmsche Wärme erreicht werden, indem der elektrisch leitfähige Aktuatordraht mit einer bestimmten elektrischen Leistung versorgt wird. Der Aktuatordraht kann von einer durchgängigen elektrischen Isolierschicht umschlossen sein.

Es versteht sich, dass das Aktuatormodul auch auf andere Art und Weise realisiert sein kann, insbesondere ohne Aktuatordraht aus Formgedächtnismaterial. Beispielsweise kann anstatt eines Aktuatordrahts ein Elektromotor oder ein strukturelles Bauteil aus Formgedächtnismaterial als Teil der Aktuatoreinheit vorgesehen sein, welcher bzw. welches die Bewegung des Blockierkörpers aus der Blockierstellung in die Arbeitsstellung bewirkt. Nachfolgend wird der Einfachheit halber nur die Variante mit einem Aktuatordraht anhand von zwei Beispielen näher beschrieben.

In einem ersten Beispiel ist der Aktuatordraht mit einem axialen Auf- und Ab um die Führungshülse herum geführt, wobei der Aktuatordraht an dem Blockierkörper und der Modulbasis abgestützt ist. Der Aktuatordraht kann mit einem mehrfachen axialen Auf- und Ab um die Führungshülse herum geführt sein, wobei der Aktuatordraht abwechselnd an dem Blockierkörper und der Modulbasis abgestützt ist. Beispielsweise ist der Aktuatordraht auch um den auf die Führungshülse aufgesetzten Blockierkörper herum geführt. In diesem Beispiel weist der Blockierkörper insbesondere eine Mehrzahl von mindestens und vorzugsweise insgesamt zwei in Umfangsrichtung im Wesentlichen gleichverteilt angeordneten Drahtführungsformationen für den Aktuatordraht auf. Der Aktuatordraht steigt dann in Umfangsrichtung beidseits jeder der Drahtführungsformationen zu axial tiefer an der Modulbasis gelegenen Drahtabstützstellen ab, vorzugsweise schräg in Bezug auf die axiale Richtung und/oder in Bezug auf eine Bewegungsrichtung des Blockierkörpers. Die Modulbasis kann in diesem Beispiel eine Mehrzahl von mindestens und vorzugsweise insgesamt zwei in Umfangsrichtung der Führungshülse im Wesentlichen gleichverteilt angeordneten Drahtabstützstellen für den Aktuatordraht aufweisen. Die Drahtabstützstellen liegen vorzugsweise radial außerhalb des Blockierkörpers. Der Aktuatordraht steigt beispielsweise in Umfangsrichtung beidseits jeder der Drahtabstützstellen zu axial höher an dem Blockierkörper gelegenen Drahtführungsformationen an, vorzugsweise schräg in Bezug auf die axiale Richtung und/oder in Bezug auf eine Bewegungsrichtung des Blockierkörpers. Beispielsweise werden die Drahtabstützstellen durch Befestigungselemente gebildet, die an der Modulbasis angebracht sind. Die Anzahl der Drahtabstützstellen entspricht vorzugsweise der Anzahl der Drahtführungsformationen. In diesem Beispiel kann der Aktuatordraht in einer axialen Draufsicht im Wesentlichen den Kanten eines Polygons folgen. Stellen des Aktuatordrahts, die an benachbarten, von derselben Kante gebildeten Ecken des Polygons liegen, sind zumindest axial voneinander beabstandet. Das Polygon kann ein konvexes und/oder gleichseitiges Polygon sein. Das Polygon ist vorzugsweise eine Raute, insbesondere ein Quadrat.

In einem zweiten Beispiel ist der Blockierkörper relativ zu der Führungshülse um die Achse drehbar zwischen seiner Blockierstellung und seiner Freigabestellung beweglich angeordnet. In diesem Fall umschlingt der Aktuatordraht vorzugsweise ausgehend von einem an eines seiner Drahtenden anschließenden Endabschnitt die Führungshülse, und vorzugsweise auch zumindest teilweise den Blockierkörper, in Umfangsrichtung bis zu einer an dem Blockierkörper gebildeten Drahtumlenkstelle. Der Aktuatordraht wird dann an der Drahtumlenkstelle umgelenkt und umschlingt dahinter die Führungshülse, und vorzugsweise auch zumindest teilweise den Blockierkörper, in Umfangsrichtung gegenläufig bis zu einem an das andere seiner Drahtenden anschließenden Endabschnitt. In diesem Fall umfasst der Aktuatordraht also zumindest zwei an einander anschließende Drahtabschnitte, von denen jeder zwischen einem Endabschnitt und der Drahtumlenkstelle verläuft und zumindest die Führungshülse umschlingt. Unter dem Begriff "umschlingen" eines Elements ist ein direktes Umwickeln oder ein berührungsloses bzw. beabstandetes Umlaufen des Elements zu verstehen. Beispielsweise umschlingt jeder der Drahtabschnitte des Aktuatordrahts die Führungshülse in Umfangsrichtung mehr als einmal. Jeder der Drahtabschnitte kann die Führungshülse in Umfangsrichtung zu mehr als 360° umschlingen. Jeder der Drahtabschnitte verläuft beispielsweise in axialer Draufsicht im Wesentlichen auf einer Spirale einwärts bis zu der auf der Spirale liegenden Drahtumlenkstelle. Die Drahtabschnitte können zumindest teilweise radial außerhalb der Drahtumlenkstelle verlaufen. Die Drahtabschnitte können teilweise auf einer Außenumfangswand des Blockierkörpers und teilweise zwischen einer Innenumfangswand und der Außenumfangswand des Blockierkörpers verlaufen, beispielsweise in einem in dem Blockierkörper ausgebildeten Tunnel, der sich von der Außenumfangswand zumindest teilweise radial nach innen und in Umfangsrichtung erstreckt. Die Drahtumlenkstelle ist beispielsweise radial innerhalb der Außenumfangsfläche des Blockierkörpers angeordnet. Die Drahtumlenkstelle ist in einem Beispiel am Ende des Tunnels angeordnet. Ein Drahtabschnitt kann zumindest teilweise auf der radial außerhalb des Tunnels liegenden Außenumfangsfläche des Blockierkörpers verlaufen. Einer oder beide der Endabschnitte des Aktuatordrahts erstrecken sich beispielsweise im Wesentlichen tangential zu dem Blockierkörper, insbesondere zu der Außenumfangsfläche des Blockierkörpers.

Es wird ferner ein System bereitgestellt, welches das Aktuatormodul sowie die Ausrüstungskomponente umfasst. Dabei kann die Ausrüstungskomponente an den Kopplungskörper gekoppelt sein. Die Ausrüstungskomponente kann eine entfaltbare, aufblasbare und/oder ausfahrbare Komponente eines Satelliten, wie beispielsweise ein Solarpanel, eine Antenne oder ein Bremsschirm sein. Die Ausrüstungskomponente kann aber auch eine Ausrüstungskomponente einer sub- oder orbitalen Plattform wie einer Rakete sein, insbesondere ein abzutrennender oder zu bewegender Raketenbauteil oder ein freizugebender Satellit.

Es wird ferner ein Satellit bereitgestellt, welches das Aktuatormodul oder/und das System umfasst. Bei dem Satelliten kann es sich um einen Klein- oder Kleinstsatelliten handeln. Ein Beispiel solcher Kleinstsatelliten stellen die sogenannten "CubeSats" dar, deren Format üblicherweise in der Einheit "U" angegeben wird. 1 U entspricht dabei einer Außenabmessung von 10 x 10 x 11,25 cm. Ein einzelner "CubeSat" kann z.B. 2U, 6U oder 12U groß sein. Der Satellit kann eine Kabelverbindung aufweisen, die mit der Aktuatoreinheit verbunden ist, sodass das Aktuatormodul durch ein entsprechendes Steuersignal aktuiert werden kann.

Nachfolgend werden beispielhafte Ausführungsformen anhand der Figuren näher erläutert, wobei dieselben Bezugszeichen, sofern nicht anders angegeben, dieselben strukturellen oder/und funktionalen Merkmale kennzeichnen. Es zeigen:
- Fig. 1: eine perspektivische Ansicht eines Teils einer beispielhaften Aktuatoranordnung vor der Aktuierung,
- Fig. 2: eine Seitenansicht der Aktuatoranordnung aus Fig. 1,
- Fig. 3: ein Schnittbild in einer Ebene A der Aktuatoranordnung aus Fig. 1,
- Fig. 4: ein Schnittbild in einer orthogonal zur Ebene A verlaufenden Ebene B der Aktuatoranordnung aus Fig. 1,
- Fig. 5: eine perspektivische Ansicht der Aktuatoranordnung aus Fig. 1 nach der Aktuierung,
- Fig. 6: ein Schnittbild in der Ebene A der Aktuatoranordnung aus Fig. 5,
- Fig. 7: ein Schnittbild in der Ebene B der Aktuatoranordnung aus Fig. 5,
- Fig. 8: eine perspektivische Ansicht eines ersten beispielhaften Aktuatormoduls;
- Fig. 9: eine perspektivische Schnittansicht des Aktuatormoduls aus Fig. 8;
- Fig. 10: eine erste seitliche Schnittansicht des Aktuatormoduls aus Fig. 12 mit Kopplungskörper in Bereitschaftsposition;
- Fig. 11: eine zweite seitliche Schnittansicht entlang der Ebene A-A des Aktuatormoduls aus Fig. 8 mit Kopplungskörper in Bereitschaftsposition;
- Fig. 12: die zweite seitliche Schnittansicht aus Fig. 15 mit Kopplungskörper in Arbeitsposition; und
- Fig. 13: eine perspektivische Ansicht eines zweiten beispielhaften Aktuatormoduls;
- Fig. 14: eine perspektivische Schnittansicht des Aktuatormoduls aus Fig. 13;
- Fig. 15: eine seitliche Schnittansicht des Aktuatormoduls aus Fig. 13 mit Kopplungskörper in Bereitschaftsposition;
- Fig. 16: die Schnittansicht aus Fig. 15 mit Kopplungskörper in Arbeitsposition;
- Fig. 17: eine Seitenansicht des Aktuatormoduls aus Fig. 13;
- Fig. 18a: eine erste Schnittansicht entlang der Ebene B-B des Aktuatormoduls aus Fig. 13;
- Fig. 18b: eine zweite Schnittansicht entlang der Ebene C-C des Aktuatormoduls aus Fig. 13; und
- Fig. 19: eine schematische Darstellung eines beispielhaften Satelliten mit zwei Aktuatormodulen und zwei Ausrüstungskomponenten.

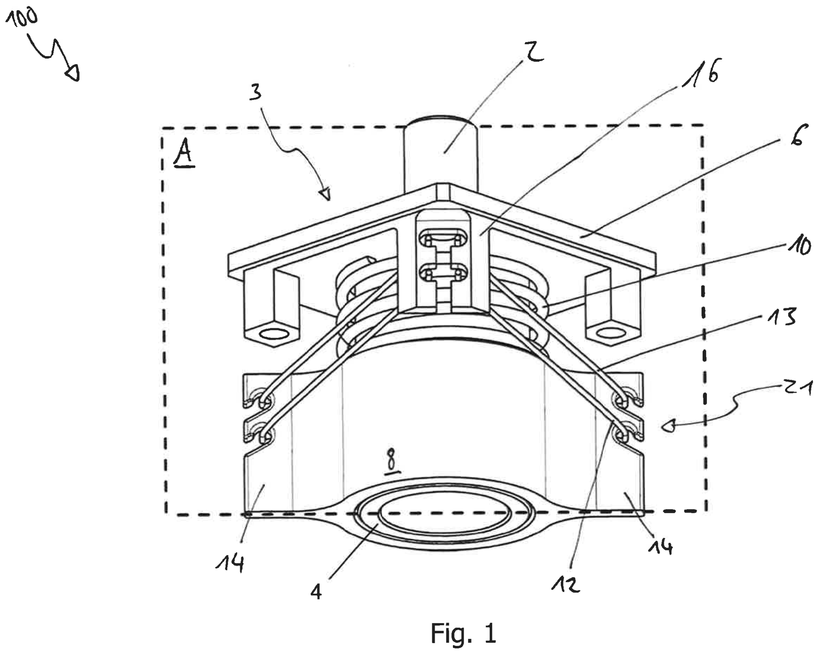

In den Figuren 1 bis 7 sind verschiedene Ansichten einer beispielhaften Aktuatoranordnung 100 eines Aktuatormoduls 1000, 2000 dargestellt. Bevor auf das hierin offenbarte Aktuatormodul 1000, 2000 eingegangen wird, soll im Folgenden zunächst die Funktionsweise dieser beispielhaften Aktuatoranordnung 100 erläutert werden. Es versteht sich, dass alternativ zu einer solchen Aktuatoranordnung 100 auch andere Aktuatoranordnungen in dem Aktuatormodul 1000, 2000 eingesetzt werden können, die z.B. keinen Draht aus Formgedächtnismaterial aufweisen.

Die beispielhafte Aktuatoranordnung 100 umfasst einen Freisetzungskörper 2, der in eine Führungshülse 4 einer Modulbasis 3 angeordnet ist. Die Modulbasis 3 umfasst ferner eine Grundplatte 6, von welcher die Führungshülse 4 im Wesentlichen orthogonal absteht. Der Freisetzungskörper 2 erstreckt sich durch die Grundplatte 6 zu der der Führungshülse 4 abgewandten Seite der Grundplatte 6.

Fig. 1 zeigt die Aktuatoranordnung 100 vor der Aktuierung mit dem Freisetzungskörper 2 in einer Bereitschaftsstellung. Auf den Freisetzungskörper 2 wirkt eine erste Federvorspannung in axialer Richtung von der Bereitschaftsstellung zu einer Arbeitsstellung. Die Aktuatoranordnung 100 ist eingerichtet, nach der Aktuierung den Freisetzungskörper 2 in axialer Richtung der Führungshülse 4 freizugeben, sodass der sich auf der der Führungshülse 4 abgewandten Seite der Grundplatte 6 erstreckende Anteil des Freisetzungskörpers 2 verkleinert wird. In anderen Worten wird durch die Aktuierung des Aktuatormoduls 100 der Freisetzungskörper 2 von der ersten Federvorspannung getrieben in die Führungshülse 4 zurückgezogen. Im zurückgezogenen Zustand befindet sich der Freisetzungskörper in seiner Arbeitsstellung. Die Aktuatoranordnung 100 kann daher auch als "Pin Puller" bezeichnet werden.

Die Aktuatoranordnung 100 umfasst einen Blockierkörper 8, welcher auf die Führungshülse 4 aufgesetzt ist. Der Blockierkörper 8 ist in axialer Richtung auf der Führungshülse 4 verschiebbar gelagert. Eine Aktuatoreinheit dient dazu, den Blockierkörper 8 in axialer Richtung auf der Führungshülse 4 entgegen einer zweiten Federvorspannung zu bewegen. Die zweite Federvorspannung wird durch das Federelement 10, welches an der Grundplatte 6 und an dem Blockierkörper 8 abgestützt ist, auf den Blockierkörper 8 ausgeübt. In der gezeigten Konfiguration, also vor der Aktuierung der Aktuatoranordnung 100, befindet sich der Blockierkörper 8 in einer Blockierstellung. In der Blockierstellung bewirkt der Blockierkörper 8 eine Blockierung des Freisetzungskörpers 2, sodass der Freisetzungskörper 2 nicht in die Führungshülse 4 zurückgezogen werden kann.

Die Aktuatoranordnung umfasst im gezeigten Beispiel zumindest einen Aktuatordraht 12, welcher mit beiden Enden an der Moduleinheit festgelegt ist und zumindest einen Teil einer Aktuatoreinrichtung 21 bildet. Der Aktuatordraht 12 ist auch an dem Blockierkörper 8 festgelegt. Es ist zu erkennen, dass der Aktuatordraht 12 in einem axialen Auf und Ab um die Führungshülse 4 gelegt ist. Hierbei werden von dem Aktuatordraht 12 mehrere im Wesentlichen geradlinig verlaufende Abschnitte gebildet, die sich jeweils zwischen dem Blockierkörper 8 und der Modulbasis erstrecken. Der Aktuatordraht 12 ist beispielsweise ein Draht aus einer Nickel-TitanLegierung (z.B. Nitinol) und hat in einem Beispiel einen Durchmesser von etwa 0.3 mm. Bei einer Erhitzung des Aktuatordrahts 12 auf eine Transformationstemperatur, die bei etwa 90°C liegen kann, kommt es zu einer Umwandlung der Kristallstruktur, sodass sich der Aktuatordraht 12 zumindest in Längsrichtung zusammenzieht.

An dem Blockierkörper 8 sind zwei in Umfangsrichtung im Wesentlichen gleichförmig angeordnete Drahtführungsformationen 14 angeordnet. Die vorliegend zwei Drahtführungsformationen 14 sind auf gegenüberliegenden Seiten des Blockierkörpers 8 angeordnet und stehen radial von der Außenumfangsfläche des Blockierkörpers 8 ab. An der Grundplatte 6 sind Befestigungselemente angeordnet. Jeder der Abschnitte des Aktuatordrahts 12 verläuft zwischen einem Befestigungselement als Drahtabstützstelle und einer Drahtführungsformation 14. Das Befestigungselement 16, an welchem beide Drahtenden des Aktuatordrahts 12 festgelegt sind, weist eine an einem axialen Ende des Befestigungselements 16 beginnende, im Wesentlichen in radialer Richtung eingebrachte Durchgangsbohrung mit zumindest T-förmigem Grundriss auf, wobei in den kurzen Schenkeln des "T" je ein Drahtende festgelegt ist.

Die Aktuatoranordnung umfasst einen von dem Aktuatordraht 12 axialen beanstandeten und im Wesentlichen gleichförmig zu dem Aktuatordraht 12 verlaufenden und ebenso festgelegten weiteren Aktuatordraht 13. Der weitere Aktuatordraht 13 ist zur Redundanz vorgesehen.

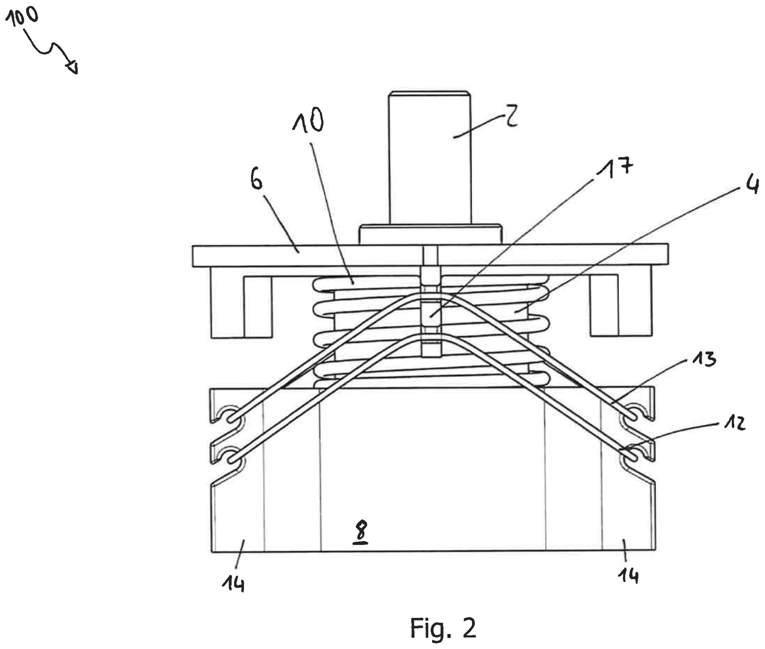

Fig. 2 zeigt eine Seitenansicht der Aktuatoranordnung 100 aus Figur 1. Hierbei ist insbesondere der Verlauf des Aktuatordrahts 12 zu erkennen. Die Befestigungspunkte des Aktuatordrahts 12 an der Modulbasis, also die Drahtabstützstellen an den Befestigungselementen, sind axial und in Umlaufrichtung um die Führungshülse 4 von den Befestigungspunkten des Aktuatordrahts 12 an dem Blockierkörper 8 bzw. an den Drahtführungsformationen 14 beanstandet. Das Befestigungselement 17 ist im Wesentlichen gleichartig zu den Drahtführungsformationen 14 ausgestaltet und dient der Umlenkung des Aktuatordrahts 12. Lediglich die axiale Richtung der an den Drahtführungsformationen 14 vorgesehenen Einkerbungen, in welche der Aktuatordraht 12 eingeführt ist, ist gegenläufig zu der axialen Richtung der an dem Befestigungselement 17 vorgesehenen Einkerbungen, in welche der Aktuatordraht 12 eingeführt ist.

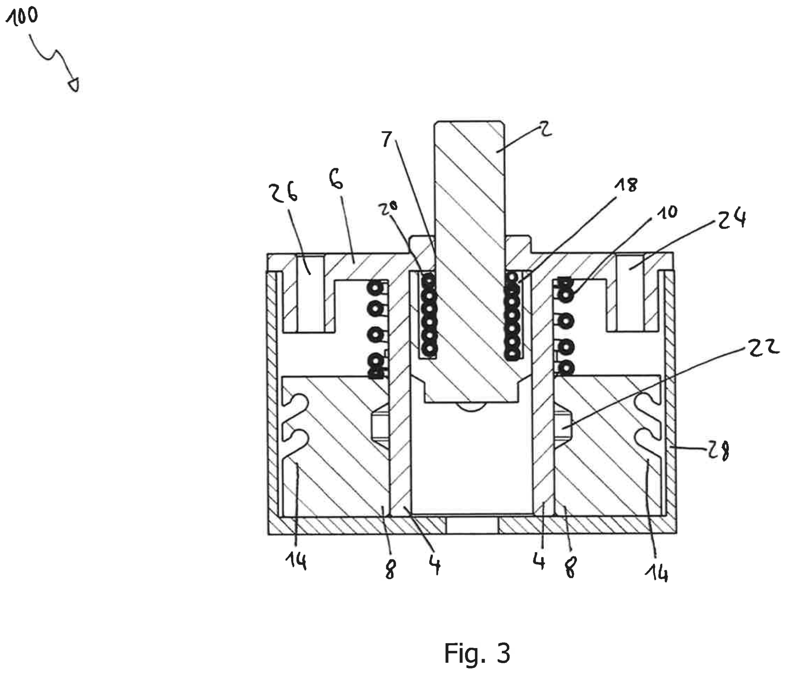

Fig. 3 zeigt eine Schnittansicht der Aktuatoranordnung 100 aus Fig. 1 entlang der in Fig. 1 dargestellten Ebene A, in welcher die Führungshülsenachse liegt. Der Übersichtlichkeit halber ist der Aktuatordraht 12 und der weitere Aktuatordraht 13 in dieser Abbildung nicht dargestellt. Es ist zu erkennen, dass die Feder 10 an der Grundplatte 6 und an dem Blockierkörper 8 abgestützt ist. Bei der Feder 10 handelt es sich um eine Druckfeder, insbesondere eine Schraubenfeder, welche den Blockierkörper 8 aus der Blockierposition von der Grundplatte 6 wegdrängen kann. Die Feder 10 ist so angeordnet, dass es die Führungshülse 4 vollständig umschließt. Die Feder übt in einem Beispiel in der Blockierstellung des Blockierkörpers 8 eine zweite Federvorspannung in Höhe von etwa 11 N auf den Blockierkörper 8 aus und in der Freigabestellung des Blockierkörpers 8 eine zweite Federvorspannung in Höhe von etwa 16 N.

Außerdem ist zu erkennen, dass der Freisetzungskörper 2 eine sich in axialer Richtung erstreckende Tasche 18 aufweist. Eine weitere Feder 20 ist innerhalb der Tasche 18 angeordnet. Die Feder 20 ist sowohl an der Grundplatte 6 als auch an einer Stirnfläche der Tasche 18 des Freisetzungskörpers 2 abgestützt und drängt die den Freisetzungskörper 2 weg von der Grundplatte 6, wenn der Freisetzungskörper freigegeben ist. Die Feder 20 ist als eine Druckfeder, insbesondere eine Schraubenfeder ausgebildet, welche in der Bereitschafsstellung des Freisetzungskörpers innerhalb der als Ringtasche geformten Tasche 18 angeordnet ist. Die Feder 20 übt die erste Federvorspannung auf den Freisetzungskörper 2 aus, welche diesen von der Bereitschaftsstellung in Richtung der Arbeitsstellung drängen kann, wenn der Blockierkörper diese Bewegung nicht blockiert. In einem Beispiel übt die Feder 20 in der Bereitschaftsstellung des Freisetzungskörpers 2 eine erste Federvorspannung in Höhe von etwa 10 N auf den Freisetzungskörper 2 aus und in der Arbeitsstellung des Freisetzungskörpers 2 eine erste Federvorspannung in Höhe von etwa 5 N.

Der Blockierkörper 8 weist an seiner Innenseite, die der Außenwand der Führungshülse 4 zugewandt ist, eine Aussparung 22 auf. Bei dieser kann es sich um eine radial umlaufende Ringnut handeln. In der Grundplatte 6 der Modulbasis sind Aussparungen 24 und 26 vorgesehen, welche der Befestigung der Aktuatoranordnung 100 an einer anderen Struktur ermöglichen, insbesondere an einer Verbindungsplatte oder/und an einem Gehäuseaufsatz des Aktuatormoduls 1000, 2000.

Außerdem ist ein Gehäuseteil 28 dargestellt, welcher mit der Grundplatte 6 verbunden ist und die Führungshülse 4 und den Blockierkörper 8 einhaust. Der Gehäuseteil 28 ist so ausgestaltet, dass er sich an einem axialen Ende der Führungshülse 4 zumindest teilweise in radial einwärts über die Innenumfangsfläche der Führungshülse 4 erstreckt, sodass eine maximale Bewegung des Freisetzungskörpers 2 durch den Gehäuseteil 28 begrenzt wird. Durch den Gehäuseteil 28 wird also die Arbeitsstellung des Freisetzungskörpers 2 festgelegt. Ferner ist zu erkennen, dass der Gehäuseteil 28 so ausgebildet ist, dass eine Bewegung des Blockierkörpers aus der Blockierstellung nur in eine Richtung, nämlich in Richtung der Freigabestellung, möglich ist. Insbesondere liegt ein axiales Ende des Blockierkörpers 8 zusammen mit einem axialen Ende der Führungshülse 4 in einer von dem Gehäuseteil 28 definierten Ebene. Durch den Gehäuseteil 28 wird also die Blockierstellung des Blockierkörpers 8 festgelegt.

Die Grundplatte 6 weist ein axial durchgehendes Führungsloch 7 auf, durch welches sich im gezeigten Beispiel der Freisetzungskörper 2 erstreckt. Der Freisetzungskörper 2 kann zumindest über eine bestimmte Strecke und in zumindest einer Richtung durch das Führungsloch 7 hindurchbewegt werden. Das Führungsloch 7 hat in der gezeigten Ausführungsform einen kleineren Innendurchmesser als die Führungshülse 4. Der Freisetzungskörper 2 ist mit der radial außerhalb der Tasche 18 liegenden Außenumfangsfläche in der Führungshülse 4 gelagert und mit der Außenumfangsfläche eines axial von der Tasche 18 beabstandeten Freisetzungskörperabschnitts in dem Führungsloch 7. Ferner wird die Bereitschaftsstellung des Freisetzungskörpers 2 durch die Grundplatte 6 der Modulbasis festgelegt.

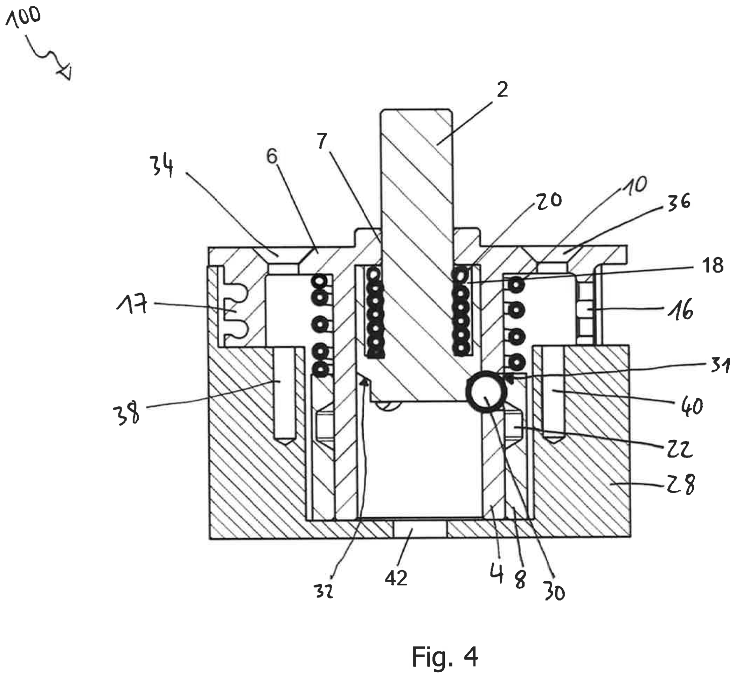

Fig. 4 zeigt ein Schnittbild der Aktuatoranordnung 100 in einer orthogonal zu der Ebene A verlaufenden Ebene B. Die Ebene A und die Ebene B schneiden sich in der Führungshülsenachse. Es ist zu erkennen, dass der Freisetzungskörper 2 trotz der ersten Federvorspannung durch eine Sperrkugel 30 in der Bereitschaftsposition gehalten wird. Die Sperrkugel 30 ist in einem Durchgangsloch 31 der Führungshülse 4 angeordnet und erstreckt sich radial einwärts über die (radial gesehen innenliegende) Innenoberfläche der Führungshülse 4 hinaus. Das Durchgangsloch 31 erstreckt sich in radialer Richtung durch die Führungshülse 4. Der Freisetzungskörper 2 weist eine, beispielsweise radial umlaufende, Abschrägung 32 auf, welche in der Bereitschaftsposition des Freisetzungskörpers 2 auf der Sperrkugel 30 aufliegt. Durch das weitere Federelement 20 wird der Freisetzungskörper 2 in Richtung der Arbeitsstellung vorgespannt, sodass die Abschrägung 32 auf die Sperrkugel 30 gedrückt wird. Somit wird die Sperrkugel 30 mit einer Kraft beaufschlagt, die zumindest teilweise radial nach außen wirkt. Allerdings ist eine Bewegung der Sperrkugel 30 radial nach außen in der dargestellten Konfiguration, also vor der Aktuierung der Aktuatoranordnung 100, nicht möglich. Der Blockierkörper 8, der sich in der Blockierposition befindet, blockiert eine solche Bewegung der Sperrkugel 30 mit seiner Innenoberfläche, die an der Sperrkugel 30 anliegt. Die Sperrkugel ist beispielsweise aus V4A rostfreiem Stahl oder aus Keramik gefertigt.

Ferner ist zu erkennen, dass die Grundplatte weitere Aussparungen 34, 36 aufweist, welche fluchtend, beispielsweise axial fluchtend, zu Ausnehmungen 38, 40 des Gehäuseteils 28 angeordnet sind. Es können Schrauben oder andere Befestigungsmittel durch die Aussparungen 34, 36 in die Ausnehmungen 38, 40 des Gehäuseteils eingebracht werden, um den Gehäuseteil 28 an der Grundplatte 6 oder/und an einer Verbindungsplatte oder/und an einem Gehäuseaufsatz des Aktuatormoduls 1000, 2000 zu befestigen. Der Aktuatordraht 12 bzw. 13 verläuft in einer axialen Draufsicht radial gesehen außerhalb der Aussparungen 34, 36 und der Ausnehmungen 38, 40.

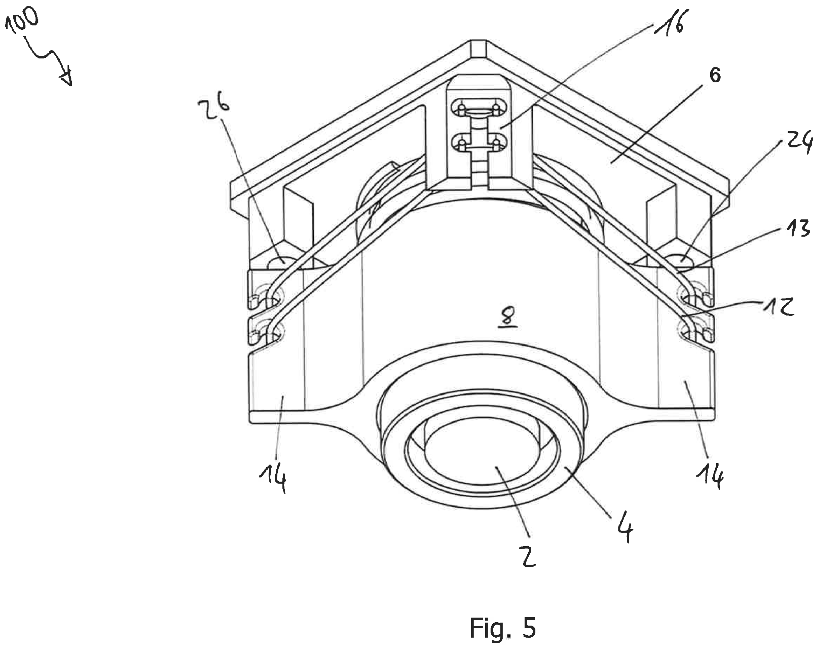

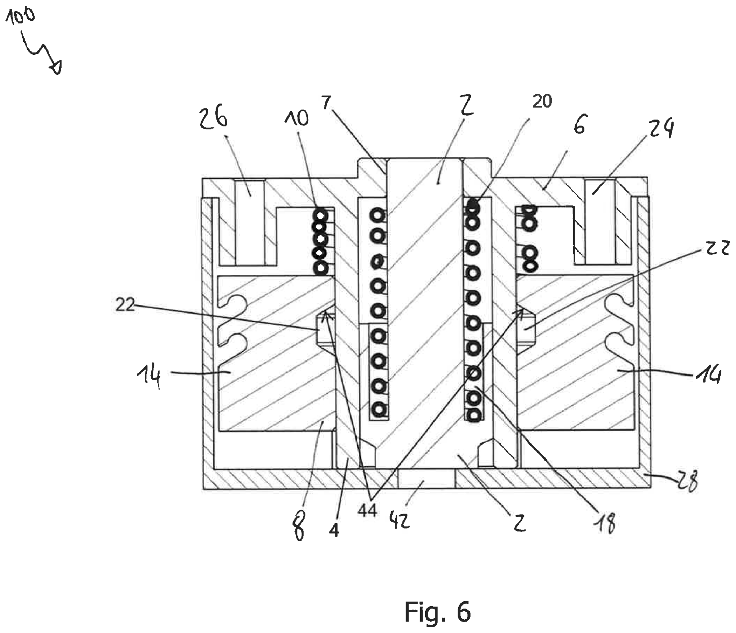

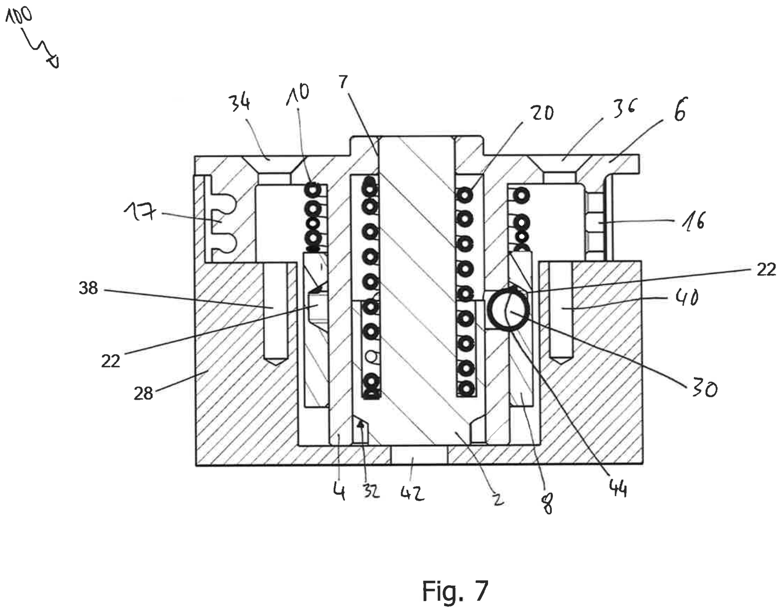

Fig. 5 zeigt eine perspektivische Ansicht der Aktuatoranordnung 100 nach der Aktuierung. Zur Aktuierung wird der Aktuatordraht 12 bzw. der weitere Aktuatordraht 13 erhitzt, wodurch sich der jeweilige Aktuatordraht in seiner Längsrichtung zusammenzieht. Aufgrund der Befestigung des Aktuatordrahts 12 bzw. 13 an der Modulbasis und an dem Blockierkörper 8, sowie aufgrund des gezeigten Drahtverlaufs, wird bei der Aktuierung der Blockierkörper 8 axial aus seiner Blockierstellung in die Freigabestellung bewegt. Wie nachfolgend unter Bezugnahme auf die Fig. 6 und 7 näher erläutert wird, kommt es hierdurch zu einer Bewegung des Freisetzungskörpers 2 von der Bereitschaftsstellung in die Arbeitsstellung.

Fig. 6 zeigt die Aktuatoranordnung 100 nach der Aktuierung in Form eines Schnittbilds in der Ebene A. Der Freisetzungskörper 2 steht in dieser Konfiguration nicht mehr auf der der Führungshülse 4 abgewandten Seite der Grundplatte 6 über. Stattdessen ist der Freisetzungskörper 2 vollständig in die Führungshülse 4 zurückgezogen. Während die Feder 10 in der Blockierstellung des Blockierkörpers 8 weniger stark komprimiert ist als in der Freigabestellung des Blockierkörpers 8, ist die Feder 20 in der Bereitschaftsstellung des Freisetzungskörpers 2 stärker komprimiert als in der Arbeitsstellung des Freisetzungskörpers 2. In anderen Worten wird zur Aktuierung der Blockierkörper 8 gegen die zweite Federvorspannung des Federelements 10 von der Blockierstellung die Freigabestellung bewegt, wodurch der Freisetzungskörper 2 freigegeben wird und sich von der ersten Federvorspannung des weiteren Federelement 20 getrieben aus der Bereitschaftsstellung in die Arbeitsstellung bewegt.

Fig. 7 zeigt ein Schnittbild in der Ebene B der Aktuatoranordnung 100 nach der Aktuierung. Es ist zu erkennen, dass die in der Durchgangsbohrung 31 angeordnete Sperrkugel 30 gegenüber der in Fig. 4 gezeigten Konfiguration radial weiter außen liegt. Die Sperrkugel 30 steht nun nicht mehr radial einwärts über die Innenumfangsfläche der Führungshülse 4 über. Stattdessen steht die Sperrkugel 30 radial auswärts über die Außenumfangsfläche der Führungshülse 4 über. Die Verschiebung der Sperrkugel 30 radial auswärts wird durch die Aussparung 22 in dem Blockierkörper 8 ermöglicht. Die Aussparung 22 ist so ausgebildet, dass sie die Sperrkugel 30 zumindest teilweise aufnehmen kann. Bei der Bewegung des Blockierkörpers aus der Blockierstellung in die Freigabestellung wird die Aussparung 22 relativ zu der Sperrkugel 30 verschoben, sodass die Sperrkugel 30 nur in der Freigabestellung des Blockierkörpers 8 in die Aussparung 22 eindringen kann. Die Sperrkugel 30 wird von der Abschrägung 32 des Freisetzungskörper 2 radial auswärts gedrückt und bewegt sich daher bei der Bewegung des Blockierkörpers 8 in dessen Freigabestellung in die Aussparung 22. Hierdurch wird der Bewegungsweg des Freisetzungskörpers 2 in axialer Richtung freigegeben, sodass sich dieser von der Feder 20 getrieben in die Arbeitsstellung bewegen kann.

Nach der Aktuierung wird der Blockierkörper 8 von dem Federelement 10 in Richtung der Blockierstellung vorgespannt. Allerdings ist die Bewegung des Blockierkörpers 8 aus der Freigabestellung in Richtung der Blockierstellung nicht möglich, da die Sperrkugel 30 eine solche Bewegung blockiert. Die Sperrkugel 30 wird durch die Feder 10 über eine Abschrägung 44 des Blockierkörpers 8, die an der Aussparung 22 angeordnet ist, radial nach innen gedrückt. Die Sperrkugel 30 kann sich jedoch nicht radial nach innen bewegen, da sie in der Arbeitsstellung des Freisetzungskörpers 2 von einer Außenumfangsfläche des Freisetzungskörpers 2, insbesondere von einer Taschenwand der Tasche 18, blockiert wird.

Wird nun der Freisetzungskörper 2 manuell zurück in seine Bereitschaftsstellung gedrückt, kann sich die Sperrkugel 30 wieder radial nach innen bewegen, sodass sie an der Abschrägung 32 des Freisetzungskörpers 2 anliegt. Durch diese Bewegung der Sperrkugel wird der Blockierkörper 8 freigegeben, sodass dieser von dem Federelement 10 zurück in die Blockierstellung bewegt wird. Ferner zu erkennen ist ein Durchgangsloch 42, welches in dem Gehäuseteil 28 an einem axialen Ende des Freisetzungskörpers 2 in der Arbeitsposition angeordnet ist. Der Freisetzungskörpers 2 kann durch das Einführen eines passenden Werkzeugs durch das Durchgangsloch 42 in seine Bereitschaftsstellung zurückgeschoben werden, wodurch ein einfacher Reset des Aktuatormoduls 100 ermöglicht wird.

Selbstverständlich können anstelle einer Sperrkugel auch mehrere Sperrkugeln oder Sperrzapfen verwendet werden. Hierzu können mehrere Durchgangslöcher 31, die vorzugsweise in Umfangsrichtung der Lagerhülse 2 gleichverteilt angeordnet sind, vorgesehen sein. Auch die Anzahl der Befestigungselemente 17 und der Drahtführungsformationen 14 ist nicht auf zwei begrenzt. In der gezeigten Ausführungsform der Aktuatoranordnung 100 ist die Bewegungsrichtung des Blockierkörpers 8 von der Blockierstellung in die Freigabestellung gegenläufig zu der der Bewegungsrichtung des Freisetzungskörpers 2 von der Bereitschaftsstellung in die Arbeitsstellung. Auch Bewegungen in derselben Richtung können bei entsprechender Auslegung des Gehäuseteils 28 und des Freisetzungskörpers 2 ermöglicht werden.

Beispielsweise sind der Blockierkörper 8, die Modulbasis mit der Führungshülse 4 und/oder der Freisetzungskörper 2 mittels eines additiven Fertigungsverfahrens, beispielsweise 3D-Druck oder Lasersintern hergestellt. Der Blockierkörper 8, die Modulbasis mit der Führungshülse 4 und/oder der Freisetzungskörper 2 können aus 316L rostfreiem Stahl bestehen.

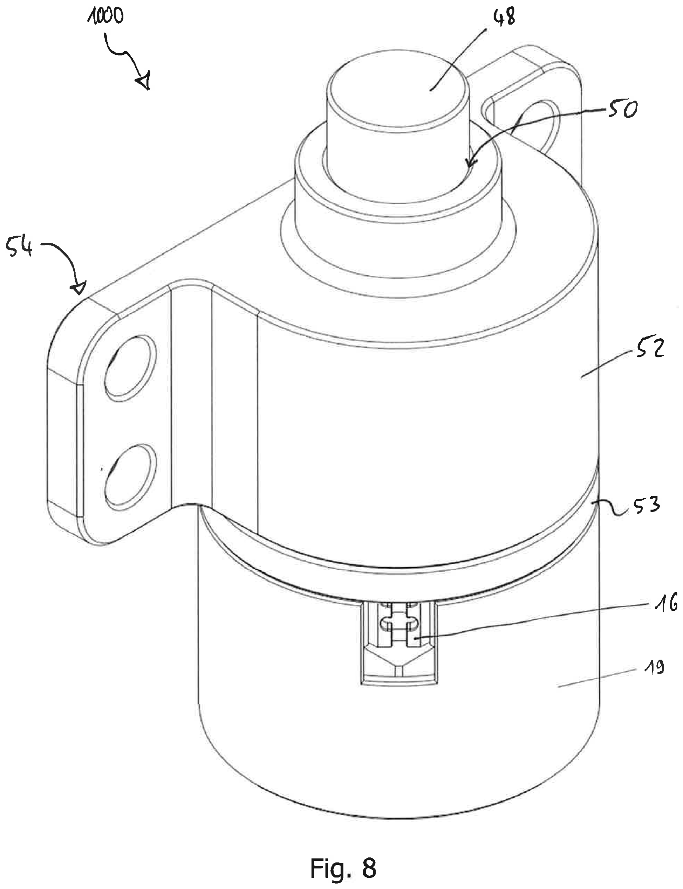

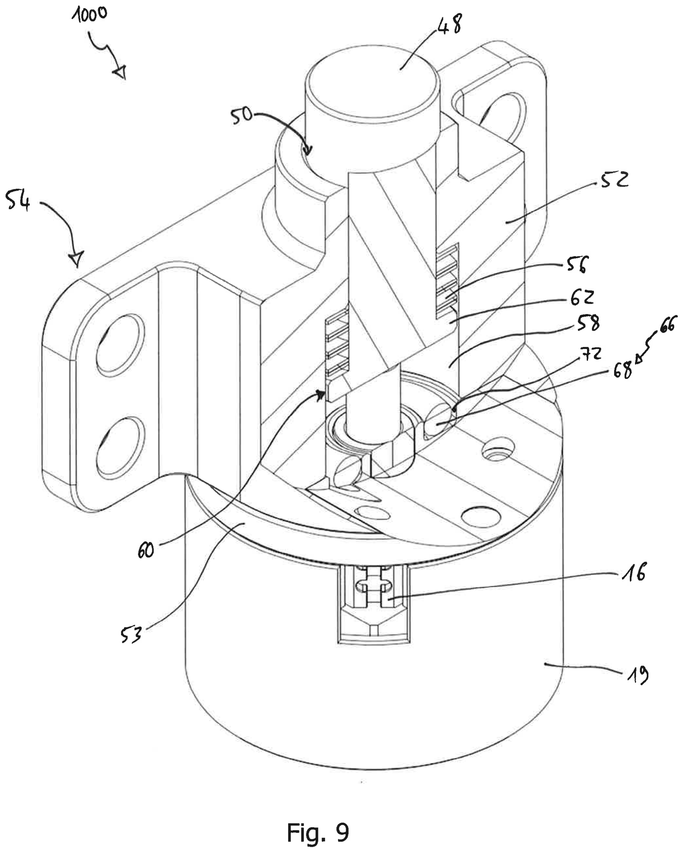

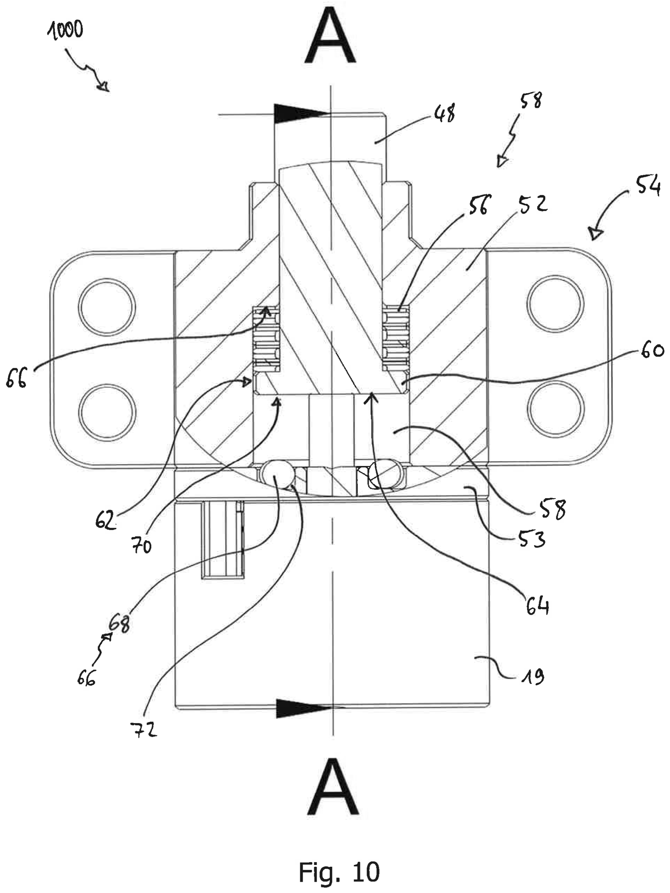

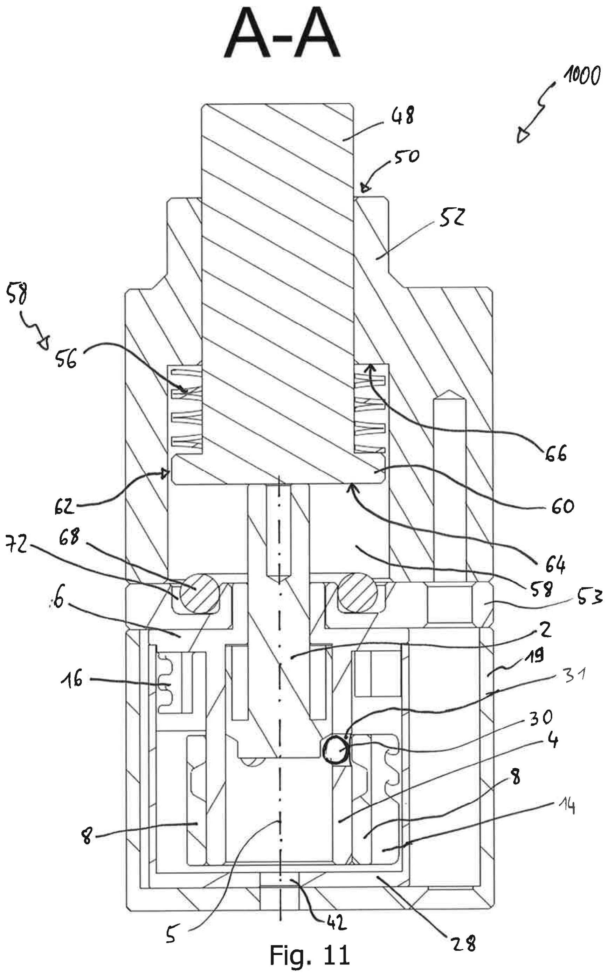

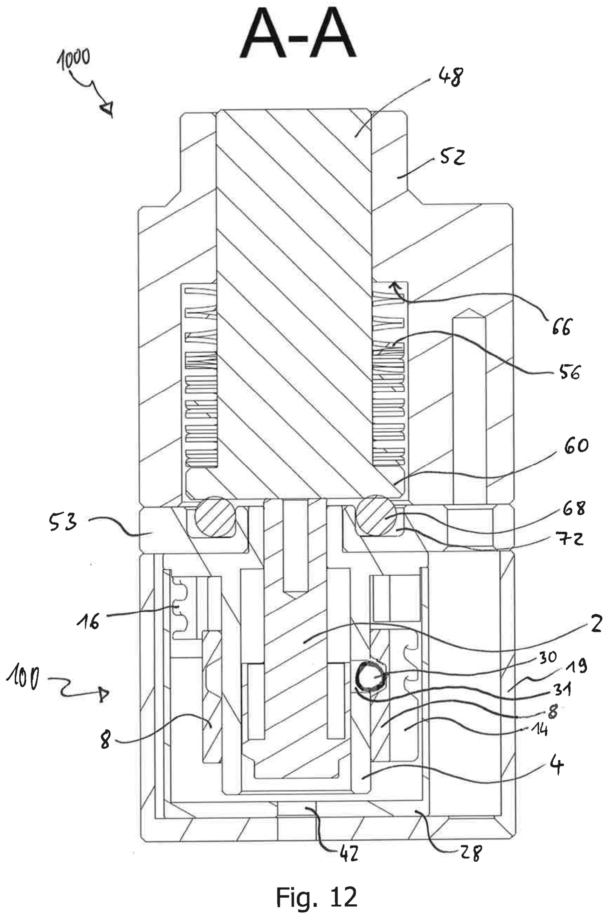

In Fig. 8 bis Fig. 12 sind verschiedene Ansichten eines ersten beispielhaften Aktuatormoduls 1000 dargestellt. In diesem Beispiel umfasst das Aktuatormodul 1000 die Aktuatoranordnung 100, wobei deren Gehäuseteil 28 von einem außenliegenden Gehäuseteil 19 umgrenzt ist. Im gezeigten Beispiel ist das Gehäuseteil 28 im Wesentlichen kubisch ausgebildet, wohingegen das außenliegende Gehäuseteil 19 zylinderförmig ausgebildet ist.

Das Aktuatormodul 1000 umfasst einen zur Kopplung mit einer Ausrüstungskomponente 4000, 5000 vorgesehenen Kopplungskörper 48, welcher relativ zu der Führungshülse 4 längs einer Hülsenachse 5 derselben aus einer Bereitschaftsposition in eine Arbeitsposition beweglich angeordnet ist, wobei der Kopplungskörper 48 durch Überführung aus der Bereitschafts- in die Arbeitsposition eine Freisetzung der Ausrüstungskomponente 4000, 5000 zu bewirken vermag. Während der Freisetzungskörper 2 vollständig in einem Innenraum des Aktuatormoduls 1000 angeordnet ist, steht ein Abschnitt des Kopplungskörpers 48 in der Bereitschaftsposition aus einer Öffnung 50 in einem Gehäuseaufsatz 52 des Aktuatormoduls nach außen vor. Der Kopplungskörper 48 ist im gezeigten Beispiel sowohl in der Bereitschaftsposition als auch in der Arbeitsposition axial beabstandet und außerhalb der Führungshülse 4 angeordnet. Der Gehäuseaufsatz 52 ist dabei an einer im Wesentlichen kreisscheibenförmigen Verbindungsplatte 53 befestigt, die wiederum an der Grundplatte 6 der Aktuatoranordnung 100 befestigt ist. Der Gehäuseaufsatz 52 kann eine Befestigungsschnittstelle 54 aufweisen, die zur Befestigung des Aktuatormoduls 1000 an einem Satelliten oder einem anderen Bauteil ausgelegt ist. Die Befestigungsschnittstelle 54 kann so zu einer Befestigung an einer Befestigungsoberfläche ausgelegt sein, dass das Aktuatormodul 1000 mit der Führungshülsenachse parallel zu der Befestigungsoberfläche ausgerichtet ist, wenn das Aktuatormodul 1000 an der Befestigungsoberfläche befestigt ist.

Das Aktuatormodul 1000 umfasst eine Feder 56, die dazu ausgelegt ist, eine Federvorspannung bereitzustellen, welche den Kopplungskörper 48 in der Bereitschaftsposition in Richtung aus der Bereitschaftsposition auf die Arbeitsposition drängt. Die Feder 56 bildet zusammen mit der Feder 10 und optional mit der Feder 20 ein Federsystem 58 des Aktuatormoduls 1000. Die Feder 56 ist vorzugsweise eine Wellenfeder, die axial beabstandet zu der Führungshülse angeordnet ist. Die Feder 56 stellt eine Federvorspannung bereit, die zumindest in der Bereitschaftsposition auf den Kopplungskörper 48 wirkt.

In dem Gehäuseaufsatz 52 ist eine sich parallel zu der Hülsenachse erstreckende Aussparung 58 vorgesehen. Die Feder 56 verläuft umfangsseitig um den Kopplungskörper 48 und ist in dieser Aussparung 58 angeordnet. Die Feder 56 ist die stärkste Feder des Aktuatormoduls 1000. In einer beispielhaften Weiterbildung des Aktuatormoduls 1000 kann auf die Feder 10 verzichtet werden, denn auch die Feder 56 übt über den Kopplungskörper 48 eine Federvorspannung auf den Freisetzungskörper 2 aus.

Im gezeigten Beispiel weist der Kopplungskörper 48 an einem axialen Ende 60 einen radialen Vorsprung 62 auf, der eine flache und kreisförmige Stirnseite 64 des Kopplungskörpers 48 bildet. Die Feder 56 ist an einer der Stirnseite 64 abgewandten Oberfläche des Vorsprungs 62 und an einer Innenwand 66 des Gehäuseaufsatzes 52 abgestützt.

Der Kopplungskörper 48 wird durch die Feder 56 des Federsystems 58 auf den Freisetzungskörper 2 gedrückt. Es ist aber auch denkbar, dass der Kopplungskörper 48 an dem Freisetzungskörper 2 befestigt ist. In jedem Fall resultiert die Aktuierung der Aktuatoranordnung 100 wie oben beschrieben in einer Bewegung des Freisetzungskörpers 2 aus der Bereitschaftsstellung in die Arbeitsstellung, was wiederum eine von der Feder 56 getriebene Bewegung des Kopplungskörpers 48 aus dessen Bereitschaftsposition in die Arbeitsposition ermöglicht.

Die Feder 56 kann größer ausgestaltet sein als die Feder 10, und daher eine größere Federkraft, und damit einhergehend auch eine größere Stellkräfte des Kopplungskörpers bereitstellen. Um zu vermeiden, dass der Kopplungskörper 48 bei einer Aktuierung der Aktuatoranordnung 100 einen Schlag auf andere Komponenten des Aktuatormoduls 1000 ausübt, der zu Beschädigungen oder extremen Erschütterungen führen könnte, umfasst das Aktuatormodul 1000 ein Dämpfungssystem 66. Dieses Dämpfungssystem 66 ist so ausgelegt ist, dass es den Kopplungskörper 48 bei einer Bewegung des Kopplungskörpers 48 in die Arbeitsposition abbremst oder/und abfedert.

Im gezeigten Beispiel ist das Dämpfungssystem 66 so ausgelegt, dass es die Arbeitsposition des Kopplungskörpers 48 festlegt. Hierzu umfasst das Dämpfungssystem 66 ein Dämpfungselement 68, welches mit einem radial außenliegenden Bereich 70 der Stirnseite 64 des Kopplungskörpers 48 in Kontakt steht, wenn der Kopplungskörper 48 in der Arbeitsposition ist. Das Dämpfungselement 68 ist vorzugsweise aus einem Elastomer gefertigt und kann als O-Ring ausgebildet sein. Das Dämpfungselement 68 erstreckt sich dabei insbesondere konzentrisch zu der Führungshülse 4. Im gezeigten Beispiel ist das Dämpfungselement 68 in einer Vertiefung 72 der Verbindungsplatte 53 angeordnet, und zwar auf einer der Führungshülse 4 abgewandten Seite. Das Dämpfungselement 68 verhindert, dass der Kopplungskörper 48 hart an der Modulbasis anschlägt, wenn er sich in seine Arbeitsposition bewegt. Stattdessen wird der Kopplungskörper 48 sanft abgefedert, sodass Beschädigungen des Aktuatormoduls 1000 unterbunden werden, selbst wenn eine sehr starke Feder 68 eingesetzt wird.

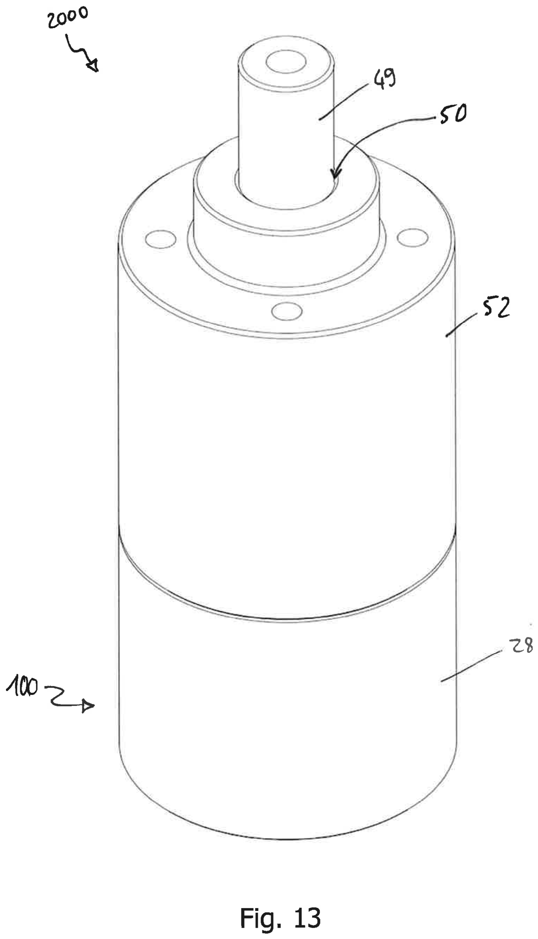

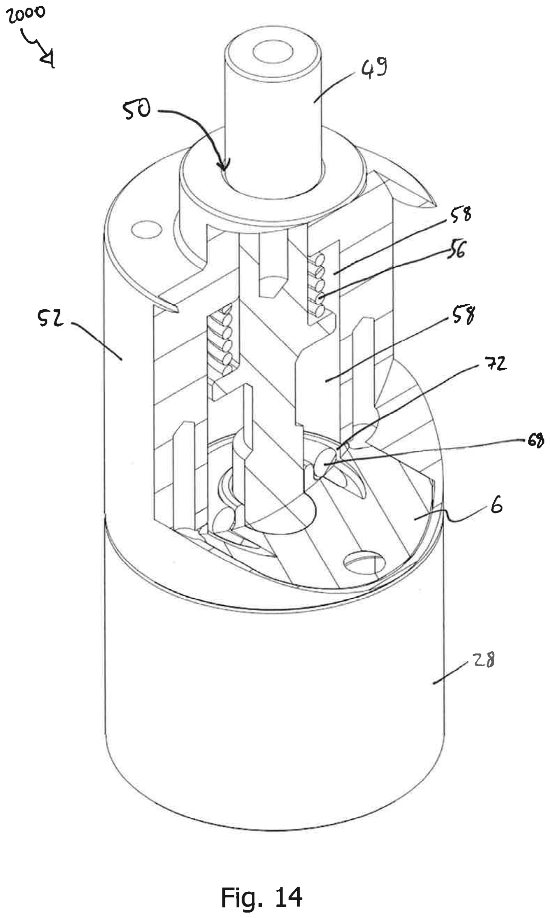

In Fig. 13 bis 18b sind verschiedene Ansichten eines zweiten beispielhaften Aktuatormoduls 2000 dargestellt.

Im Vergleich zum Aktuatormodul 1000 ist hierbei anstelle der Kombination eines Freisetzungskörpers 2 und eines Kopplungskörpers 48 nur ein Kopplungskörper 49 vorgesehen. Dieser Kopplungskörper 49 ist in die Führungshülse 4 eingesetzt und weist einen zwischen den beiden axialen Enden 74, 76 angeordneten radialen Vorsprung 78 auf. Eine erste Oberfläche 80 des Vorsprungs 78 kommt mit dem Dämpfungselement 68 in Kontakt, wenn der Kopplungskörper 49 in der Arbeitsposition ist. Der Kopplungskörper 49 erstreckt sich dabei in axialer Richtung durch das Dämpfungselement 68 hindurch. Eine axial der Oberfläche 80 gegenüberliegende zweite Oberfläche 82 des Vorsprungs 78 stützt die Feder 56 ab, die im gezeigten Beispiel als Spiralfeder ausgebildet ist aber auch eine Wellenfeder sein kann. Im Aktuatormodul 2000 ist lediglich eine einzige Feder 56 vorgesehen, die eine Federvorspannung in Richtung der Arbeitsposition des Kopplungskörpers 49 bereitstellt, die Feder 10 ist also nicht vorgesehen.

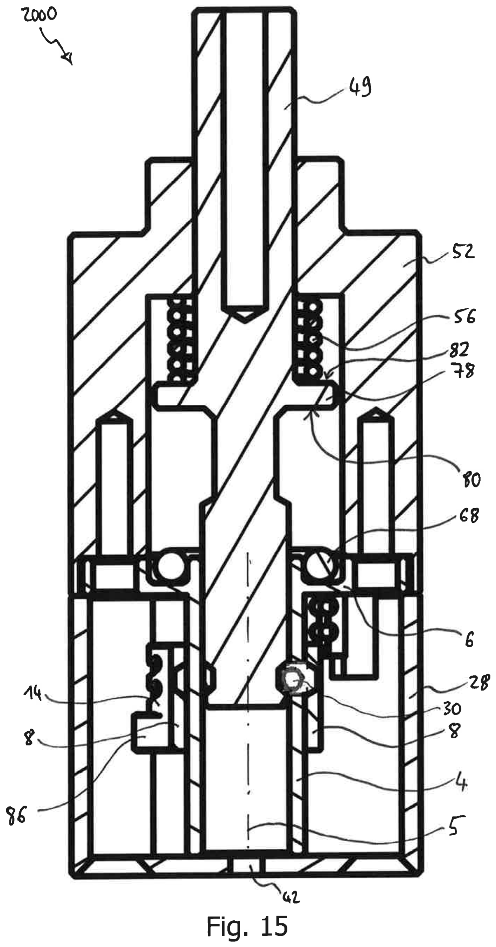

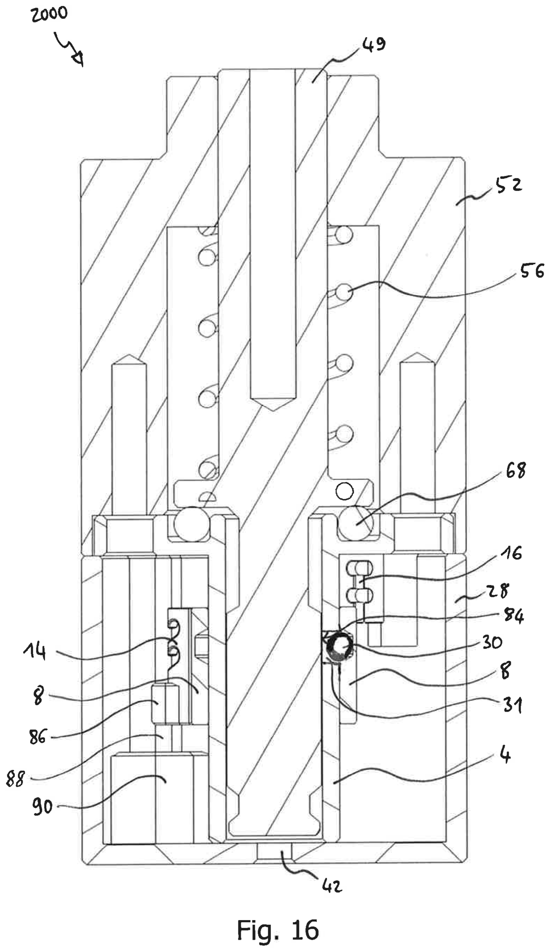

Während im Aktuatormodul 1000 eine radial außenliegende Oberfläche der Tasche 18 des Freisetzungskörpers 2 vor der Sperrkugel 30 liegt, wenn der Freisetzungskörper 2 in der Arbeitsstellung ist, liegt im Aktuatormodul 2000 eine radial außenliegender Oberflächenabschnitt 84 des Kopplungskörpers 49 vor der Sperrkugel 30, wenn der Kopplungskörper 49 in der Arbeitsposition ist. In Fig. 15 ist der Kopplungskörper 49 noch in der Bereitschaftsstellung, der Blockierkörper 8 wurde jedoch bereits in die Freigabestellung bewegt. In diesem Zustand kann sich die Sperrkugel 30 durch die Öffnung 31 in der Hülsenwand 4 radial nach außen bewegen. Hierbei wird sie durch die Schrägung an dem Kopplungskörper 49, welcher aufgrund der Feder 56 nach unten drückt, radial nach außen gedrängt. Nach dem Ausweichen der Sperrkugel 30 kann sich der Kopplungskörper 49 dann federgetrieben nach unten in die Arbeitsstellung bewegen, wie in Fig. 16 gezeigt.

Im Gegensatz zum Aktuatormodul 1000 ist bei dem Aktuatormodul 2000 ein einstückiges Gehäuse vorgesehen, man kann also sagen, dass hier der Gehäuseteil 28 das einstückige Gehäuse bildet. Der Gehäuseteil 28 ist an der Grundplatte 6 befestigt und außenseitig z.B. im Wesentlichen zylindrisch geformt. Der Gehäuseaufsatz 52 ist an der gegenüberliegenden Seite der Grundplatte 6 befestigt. Im Gegensatz zum Aktuatormodul 1000 ist bei dem Aktuatormodul 2000 also kein Gehäuseteil 19 und auch keine Verbindungsplatte 53 vorgesehen.

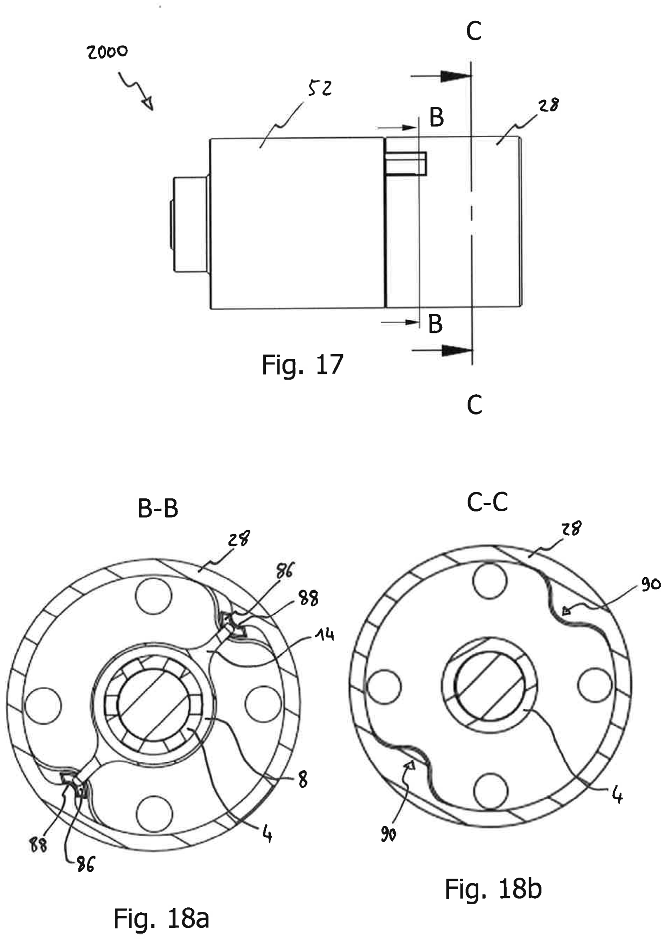

Wie insbesondere in Fig. 17, 18a und 18b zu erkennen, ist der Blockierkörper 8 des Aktuatormoduls 2000 nicht nur auf der Führungshülse 4 aufgesetzt, wodurch seine axiale Bewegungsrichtung vorgegeben ist, sondern außerdem gegen eine Drehung um die Hülsenachse 5 gesichert. Hierzu weist der Blockierkörper radial außenliegende Gleitfortsätze 86 auf, die zum Beispiel axial benachbart zu den Drahtführungsformationen 14 angeordnet sein können. Das Gehäuseteil 28 weist an einer Innenseite für jeden Gleitfortsatz 86 ein Führungselement 88 auf, das als Schiene ausgebildet ist, welche sich parallel zu der Hülsenachse 5 erstreckt. Die Gleitfortsätze 86 sind dabei an die Führungselemente 88 gekoppelt, sodass sie entlang der Schiene geführt werden. Vorzugsweise sind die Kontaktflächen zwischen Gleitfortsatz 86 und Führungselement 88 jeweils kanten- und stufenlos ausgebildet um ein Verkanten der beiden Teile bei deren axialer Relativbewegung zu verhindern. An einem axialen Ende des Führungselements 88 kann ein Anschlagselement 90 vorgesehen sein, um einen Endpunkt der möglichen Bewegung des Gleitfortsatzes 86 in axialer Richtung festzulegen. Der Anschlagspunkt 90 kann ebenso wie das Führungselement 88 an einer Innenseite des Gehäuseteils 28 vorgesehen sein. Es ist dabei denkbar, die Führungselemente 88 oder/und das Anschlagselement 90 einstückig mit dem Gehäuseteil 28 zu fertigen. Andere Arten von Linearführung sind ebenso denkbar.

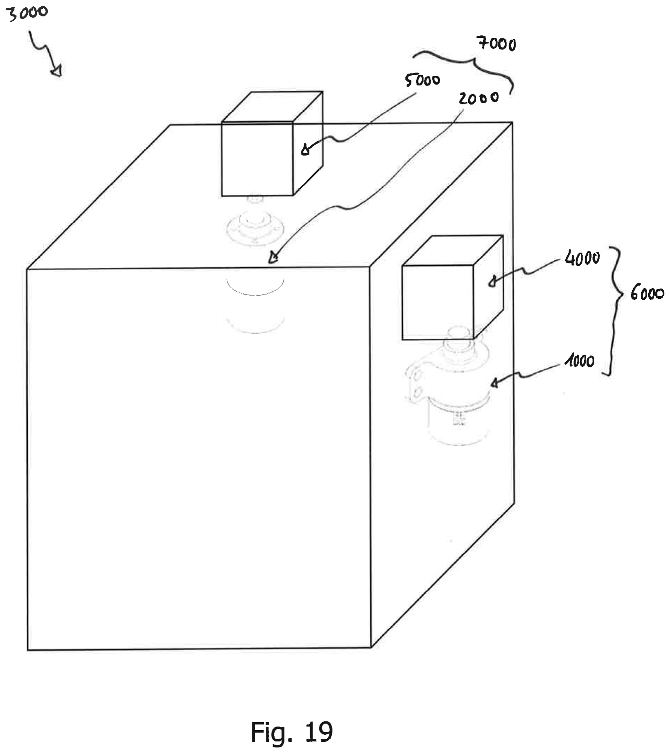

Fig. 19 zeigt eine schematische Darstellung eines beispielhaften Satelliten 3000 mit zwei Aktuatormodulen 1000, 2000 und zwei Ausrüstungskomponenten 4000, 5000. Bei dem Satelliten 3000 kann es sich um einen Klein- oder Kleinstsatelliten handeln. Die jeweilige Ausrüstungskomponente 4000, 5000 kann eine entfaltbare, aufblasbare und/oder ausfahrbare Komponente des Satelliten 3000, wie beispielsweise ein Solarpanel, eine Antenne oder ein Bremsschirm sein. Ein jedes Aktuatormodul 1000, 2000 bildet zusammen mit dem daran gekoppelten Ausrüstungskomponente ein System 6000, 7000.

Es versteht sich, dass diese beispielhaften Ausführungsformen abgewandelt werden können. Insbesondere die in den Figuren gezeigten relativen Abmessungen der einzelnen Bestandteile können je nach Einsatzzweck und Anforderungen angepasst werden. Auch sind die Merkmale der beiden Aktuatormodule 1000, 2000 miteinander kombinier- oder austauschbar. So ist denkbar, das Gehäuse des Aktuatormoduls 2000 zweiteilig mit Gehäuseteilen 19 und 28 auszuführen oder/und das Gehäuse des Aktuatormoduls 1000 einstückig auszubilden. Auch kann z.B. der Kopplungskörper 49 in dem Aktuatormodul 1000 eingesetzt werden, wobei dann der Freisetzungskörper 2 weggelassen werden kann. Auch ist denkbar, den Blockierkörper 8 aus dem Aktuatormodul 1000 mit Gleitfortsätzen 86 auszustatten, und das Gehäuseteil 28 aus dem Aktuatormodul 1000 mit Führungselementen 88 zu versehen. Weitere Modifikationen sind ebenso denkbar.

## Patentansprüche

1. Aktuatormodul (1000; 2000) zur Freisetzung einer Ausrüstungskomponente (4000; 5000), umfassend:
eine Führungshülse (4);
einen zur Kopplung mit der Ausrüstungskomponente (4000; 5000) vorgesehenen Kopplungskörper (48; 49), welcher relativ zu der Führungshülse (4) längs einer Hülsenachse (5) derselben aus einer Bereitschaftsposition in eine Arbeitsposition beweglich angeordnet ist, wobei der Kopplungskörper (48; 49) durch Überführung aus der Bereitschafts- in die Arbeitsposition eine Freisetzung der Ausrüstungskomponente (4000; 5000) zu bewirken vermag;
einen relativ zu der Führungshülse (4) zwischen einer Blockierstellung und einer Freigabestellung beweglichen Blockierkörper (8), welcher in seiner Blockierstellung eine Blockierung des Kopplungskörpers (48; 49) gegen Bewegung aus der Bereitschaftsposition in die Arbeitsposition bewirkt und in seiner Freigabestellung eine Bewegung des Kopplungskörpers (48; 49) aus der Bereitschaftsposition in die Arbeitsposition gestattet;
eine Aktuatoreinrichtung (21) zur Bewegung des Blockierkörpers (8) aus der Blockierstellung in die Freigabestellung;
ein Federsystem (58), das dazu ausgelegt ist, eine Federvorspannung bereitzustellen, welche den Kopplungskörper (48; 49) in der Bereitschaftsposition in Richtung aus der Bereitschaftsposition auf die Arbeitsposition drängt; und
ein Dämpfungssystem (66), das so ausgelegt ist, dass es den Kopplungskörper (48; 49) bei einer Bewegung des Kopplungskörpers in die Arbeitsposition abbremst oder/und abfedert.

2. Aktuatormodul (1000; 2000) nach Anspruch 1, wobei das Dämpfungssystem (66) so ausgelegt ist, dass es die Arbeitsposition des Kopplungskörpers (48; 49) festlegt.

3. Aktuatormodul (1000; 2000) nach Anspruch 1 oder 2, wobei das Dämpfungssystem (66) ein Dämpfungselement (68) umfasst, wobei das Aktuatormodul (1000; 2000) so ausgelegt ist, dass das Dämpfungselement (68) mit dem Kopplungskörper (48; 49) in Kontakt steht, wenn der Kopplungskörper (48; 49) in der Arbeitsposition ist.

4. Aktuatormodul (1000; 2000) nach Anspruch 3, wobei der Kopplungskörper (48; 49) einen radialen Vorsprung (62; 78) aufweist, wobei das Aktuatormodul (1000; 2000) so ausgelegt ist, dass das Dämpfungselement (68) in direktem Kontakt mit dem radialen Vorsprung (62; 78) steht, wenn der Kopplungskörper (48; 49) in der Arbeitsposition ist.

5. Aktuatormodul (1000; 2000) nach Anspruch 4, wobei sich der Kopplungskörper (49) von einem ersten axialen Ende (74) zu einem zweiten axialen Ende (76) erstreckt und wobei der radiale Vorsprung (78) zwischen den beiden axialen Enden (74, 76) des Kopplungskörpers (49) angeordnet ist.

6. Aktuatormodul (1000; 2000) nach einem der Ansprüche 3 bis 5, wobei sich das Dämpfungselement (68) konzentrisch zu der Führungshülse (4) erstreckt; und/oder wobei das Aktuatormodul derart ausgelegt ist, dass sich das Dämpfungselement (68) in Umfangsrichtung um den Kopplungskörper (48) erstreckt, zumindest wenn der Kopplungskörper (48) in der Arbeitsposition ist.

7. Aktuatormodul (1000; 2000) nach einem der Ansprüche 3 bis 6, wobei das Dämpfungselement (68) in einer der Führungshülse (4) abgewandten Seite einer Modulbasis (3) oder einer Verbindungsplatte (53) des Aktuatormoduls (1000; 2000) angeordnet ist.

8. Aktuatormodul (1000; 2000) nach einem der Ansprüche 1 bis 7, wobei der Kopplungskörper (48) zumindest in der Bereitschaftsposition außerhalb der Führungshülse (4) angeordnet ist.

9. Aktuatormodul (1000; 2000) nach zumindest Anspruch 4, wobei der radiale Vorsprung (62; 78) zumindest in der Bereitschaftsposition axial beabstandet zu der Führungshülse (4) angeordnet ist.

10. Aktuatormodul (1000; 2000) nach einem der Ansprüche 1 bis 9, wobei das Federsystem (58) eine Feder (56) umfasst, die außerhalb der Führungshülse (4) angeordnet ist und eine Federvorspannung bereitstellt, die zumindest in der Bereitschaftsposition auf den Kopplungskörper (48; 49) wirkt.

11. Aktuatormodul (1000; 2000) nach Anspruch 10 und zumindest Anspruch 4, wobei die Feder (56) an dem radialen Vorsprung (62; 78) des Kopplungskörpers (48; 49) abgestützt ist.

12. Aktuatormodul (1000; 2000) nach Anspruch 10 oder 11, ferner umfassend einen Gehäuseaufsatz (52), durch welchen sich eine parallel zu der Hülsenachse (4) verlaufende Aussparung (58) erstreckt, wobei sich die Feder (56) umfangsseitig um den Kopplungskörper (48; 49) erstreckt und in der Aussparung (58) angeordnet ist.

13. Aktuatormodul (1000; 2000) nach einem der Ansprüche 1 bis 12, ferner umfassend einen in die Führungshülse (4) eingesetzten Freisetzungskörper (2), welcher relativ zu der Führungshülse (4) längs der Hülsenachse (5) aus einer Bereitschaftsstellung in eine Arbeitsstellung beweglich angeordnet ist, wobei das Federsystem (58) ferner dazu ausgelegt ist, eine Federvorspannung bereitzustellen, welche den Freisetzungskörper (2) in der Bereitschaftsstellung in Richtung auf die Arbeitsstellung drängt, wobei der Freisetzungskörper (2) so ausgelegt ist, dass er in der Bereitschaftsstellung eine Bewegung des Kopplungskörpers (48) aus der Bereitschaftsposition in die Arbeitsposition blockiert und bei einer Bewegung aus der Bereitschaftsstellung in die Arbeitsstellung eine Bewegung des Kopplungskörpers (48) aus der Bereitschaftsposition in die Arbeitsposition gestattet, wobei der Blockierkörper (8) in seiner Blockierstellung eine Blockierung des Freisetzungskörpers (2) gegen Bewegung aus der Bereitschaftsstellung in die Arbeitsstellung bewirkt und in seiner Freigabestellung eine Bewegung des Freisetzungskörpers (2) aus der Bereitschaftsstellung in die Arbeitsstellung gestattet.

14. System (6000; 7000), umfassend ein Aktuatormodul (1000; 2000) nach einem der Ansprüche 1 bis 13 sowie die Ausrüstungskomponente (4000; 5000).

15. Satellit (3000), umfassend ein Aktuatormodul (1000; 2000) nach einem der Ansprüche 1 bis 13 oder/und ein System (6000; 7000) nach Anspruch 14.
